# EUROPEAN PATENT APPLICATION

(11) **EP 4 669 037 A1**
(43) Date of publication of application: **24.12.2025**
(21) Application number: 24775054.0
(22) Date of filing: 24.01.2024
(51) Int. Cl.: H05K 5/00, H05K 5/03, H04M 1/02, C09J 7/20, G06F 1/16

(54) **ADHESIVE MEMBER AND ELECTRONIC DEVICE COMPRISING SAME**

(30) Priority: 21.03.2023 KR 20230036672; 05.04.2023 KR 20230044971
(71) Applicant: Samsung Electronics Co., Ltd., Suwon-si, Gyeonggi-do 16677 (KR)
(72) Inventor: LIM, Junyub, Suwon-si Gyeonggi-do 16677 (KR); SONG, Taehyun, Suwon-si Gyeonggi-do 16677 (KR); KIM, Myunggon, Suwon-si Gyeonggi-do 16677 (KR); KIM, Seohyun, Suwon-si Gyeonggi-do 16677 (KR); JUNG, Jeamoon, Suwon-si Gyeonggi-do 16677 (KR)
(74) Representative: Walaski, Jan Filip
(86) International application number: PCT/KR2024/001101
(87) International publication number: WO 2024/196006

(57) **Abstract**

The present disclosure relates to an electronic device. The electronic device according to one embodiment of the present disclosure comprises: a housing including a support member; a cover of which at least a portion is arranged to face the support member, and which extends toward the edge of the support member; and an adhesive member which is arranged between the support member and the cover and which has a first region and a second region extending from the first region toward the edge of the support member, wherein the adhesive member includes: a pressure sensitive adhesive layer having a first pressure sensitive adhesive layer coupled to the support member, and a second pressure sensitive adhesive layer spaced apart from the first pressure sensitive adhesive layer and coupled to the cover; and a base material layer arranged between the first pressure sensitive adhesive layer and the second pressure sensitive adhesive layer, and, in the first pressure sensitive adhesive layer and/or the second pressure sensitive adhesive layer, the second region is thicker than the first region.

## Description

### [Technical Field]

Various embodiments of the disclosure relate to an electronic device, e.g., an adhesive member and an electronic device including the same.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

### [Detailed Description of the Invention]

### [Technical Solution]

An electronic device according to an embodiment of the disclosure may comprise a housing including a supporting member, a cover at least a portion of which is disposed to face, the supporting member and extending toward an edge of the supporting member, and an adhesive member disposed between the supporting member and the cover, and including a first area and a second area extending from the first area toward the edge of the supporting member, wherein the adhesive member includes an adhesive layer including a first adhesive layer coupled to the supporting member and a second adhesive layer spaced apart from the first adhesive layer and coupled to the cover, and a base layer disposed between the first adhesive layer and the second adhesive layer, and wherein at least one of the first adhesive layer and the second adhesive layer may have a larger thickness in the second area than in the first area.

An electronic device according to an embodiment of the disclosure may comprise a supporting member having an edge, a cover disposed to at least partially face the supporting member and extending toward the edge of the supporting member, and an adhesive member disposed between the supporting member and the cover and extending toward the edge of the supporting member, wherein the adhesive member includes a base layer disposed between the supporting member and the cover and spaced apart from each of the supporting member and the cover and an adhesive layer having one surface coupled to the supporting member and another surface coupled to the cover, providing a space where the base layer is disposed between the one surface and the other surface, and increasing in thickness along a direction toward the edge of the supporting member.

### [Brief Description of Drawings]

FIG. 1 is a block diagram illustrating an electronic device in a network environment according to an embodiment;
FIG. 2 is a front perspective view illustrating an electronic device according to an embodiment of the disclosure;
FIG. 3 is a rear perspective view illustrating an electronic device according to an embodiment of the disclosure;
FIG. 4 is a front exploded perspective view illustrating an electronic device according to an embodiment of the disclosure;
FIG. 5 is a rear exploded perspective view illustrating an electronic device according to an embodiment of the disclosure;
FIG. 6 illustrates a cover having an adhesive member attached thereto according to an embodiment of the disclosure;
FIG. 7 illustrates an adhesive member according to an embodiment of the disclosure;
FIG. 8 is a cross-sectional view taken along B-B' of FIG. 7;
FIGS. 9A, 9B, 9C, 9D, 9E, 9F, and 9G are cross-sectional views taken along line A-A' where an adhesive member according to embodiments of the disclosure is disposed;
FIG. 10 is a block diagram illustrating a method for manufacturing an adhesive member according to an embodiment of the disclosure;
FIG. 11 is a cross-sectional view taken along line C-C' of FIG. 3;
FIG. 12 is a view illustrating an effect of an adhesive member according to an embodiment of the disclosure;
FIG. 13 is a view illustrating an operation of an adhesive member according to an embodiment of the disclosure;
FIG. 14 is a view illustrating an effect of an adhesive member according to an embodiment of the disclosure; and
FIG. 15 is a view illustrating an effect of an adhesive member according to an embodiment of the disclosure.

### [Mode for Carrying out the Invention]

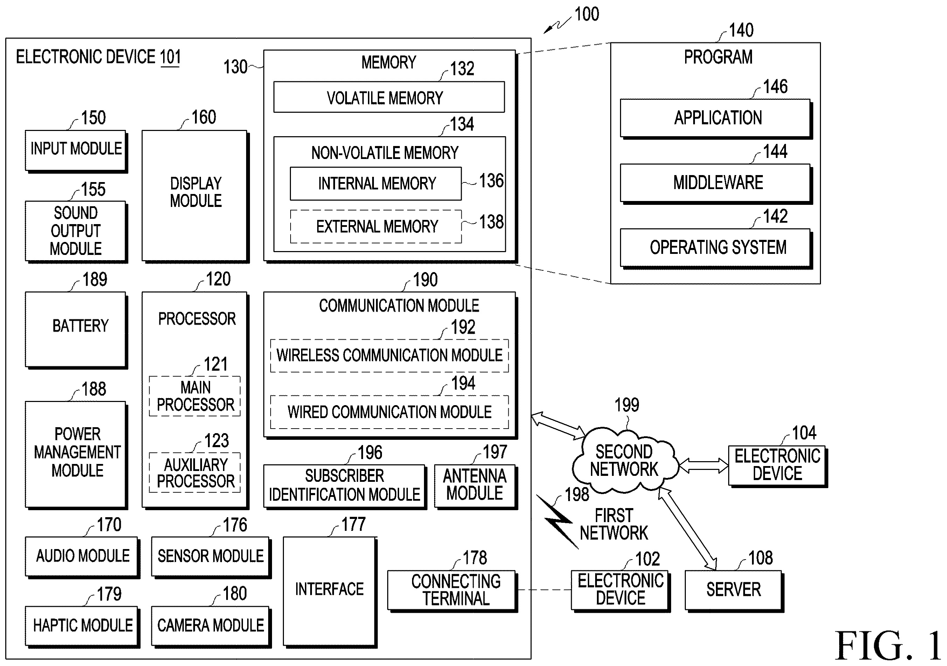

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

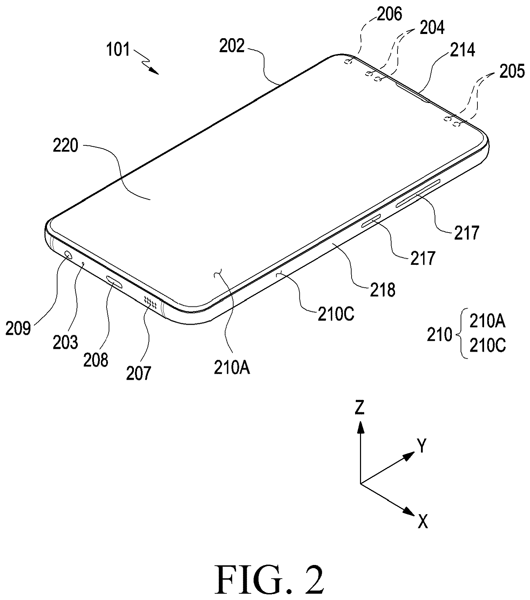

FIG. 2 is a front perspective view illustrating an electronic device according to an embodiment of the disclosure.

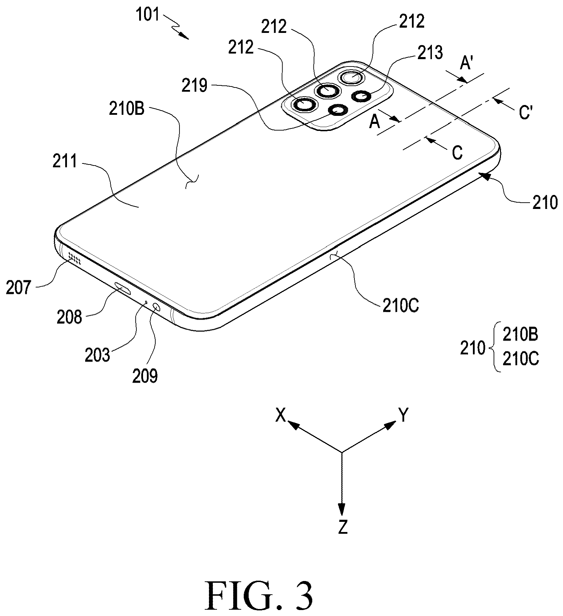

FIG. 3 is a rear perspective view illustrating an electronic device according to an embodiment of the disclosure.

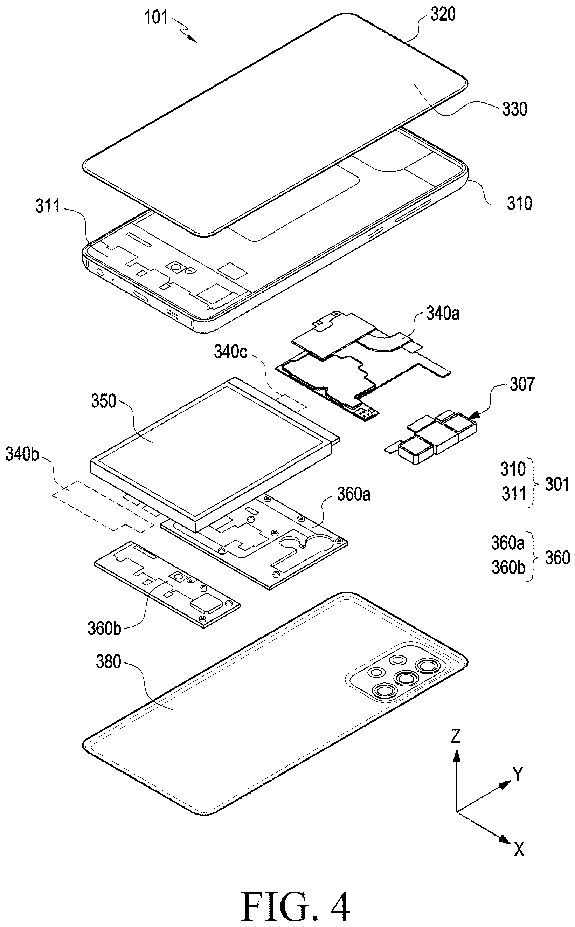

The embodiments of FIGS. 2 and 3 may be combined with the embodiment of FIG. 1 or the embodiments of FIGS. 4 to 15.

Referring to FIGS. 2 and 3, according to an embodiment, an electronic device 101 (e.g., the electronic device 101 of FIG. 1) may include a housing 210 including a first surface (or front surface) 210A, a second surface (or rear surface) 210B, and a side surface 210C surrounding a space between the first surface 210A and the second surface 210B. According to an embodiment (not illustrated), the housing 210 may denote a structure forming the first surface 210A of FIG. 2, the second surface 210B of FIG. 3, and some of the side surfaces 210C. According to an embodiment, at least part of the first surface 210A may have a substantially transparent front plate 202 (e.g., a glass plate or polymer plate including various coat layers). The second surface 210B may be formed by a rear plate 211 that is substantially opaque. The rear plate 211 may be formed of, e.g., laminated or colored glass, ceramic, polymer, metal (e.g., aluminum, stainless steel (STS), or magnesium), or a combination of at least two thereof. The side surface 210C may be formed by a side structure (or "side bezel structure") 218 that couples to the front plate 202 and the rear plate 211 and includes a metal and/or polymer. In an embodiment, the rear plate 211 and the side structure 218 may be integrally formed together and include the same material (e.g., a metal, such as aluminum).

Although not shown, the front plate 202 may include area(s) that bend from at least a portion of an edge toward the rear plate 211 and seamlessly extend. In an embodiment, only one of the areas of the front plate 202 (or the rear plate 211), which bend to the rear plate 211 (or front plate 202) and extend may be included in one edge of the first surface 210A. According to an embodiment, the front plate 202 or the rear plate 211 may have a substantially flat plate shape. For example, no bent and extended area may be included. When an area bending and extending is included, the thickness of the electronic device 101 at the portion including the area bending and extending may be smaller than the thickness of the rest.

According to an embodiment, the electronic device 101 may include at least one or more of a display 220, audio modules 203, 207, and 214, sensor modules 204 and 219, camera modules 205, 212, and 213, key input devices 217, a light emitting device 206, and connector holes 208 and 209. In an embodiment, the electronic device 101 may exclude at least one (e.g., the key input device 217 or the light emitting device 206) of the components or may add other components.

The display 220 may be visually exposed through a significant portion of the front plate 202. In an embodiment, at least a portion of the display 220 may be visually exposed through the front plate 202 forming the first surface 210A, or through a portion of the side surface 210C. In an embodiment, the edge of the display 220 may be formed to be substantially the same in shape as an adjacent outer edge of the front plate 202. In an embodiment (not illustrated), the interval between the outer edge of the display 220 and the outer edge of the front plate 202 may remain substantially even to give a larger area of visual exposure of the display 220.

In an embodiment (not shown), the screen display region of the display 220 may have a recess or opening in a portion thereof, and at least one or more of the audio module 214, sensor module 204, camera module 205, and light emitting device 206 may be aligned with the recess or opening. In an embodiment (not shown), at least one or more of the audio module 214, sensor module 204, camera module 205, fingerprint sensor (not shown), and light emitting device 206 may be included on the rear surface of the screen display area of the display 220. In an embodiment (not illustrated), the display 220 may be disposed to be coupled with, or adjacent, a touch detecting circuit, a pressure sensor capable of measuring the strength (pressure) of touches, and/or a digitizer for detecting a magnetic field-type stylus pen. In an embodiment, at least part of the sensor modules 204 and 219 and/or at least part of the key input devices 217 may be disposed in the first regions 210D and/or the second regions 210E.

The audio modules 203, 207, and 214 may include a microphone hole 203 and speaker holes 207 and 214. A microphone for acquiring external sounds may be disposed in the microphone hole 203. In an embodiment, a plurality of microphones may be disposed to detect the direction of the sound. The speaker holes 207 and 214 may include an external speaker hole 207 and a phone receiver hole 214. In an embodiment, the speaker holes 207 and 214 and the microphone hole 203 may be implemented as a single hole, or speakers may be rested without the speaker holes 207 and 214 (e.g., piezo speakers).

The sensor modules 204 and 219 may generate an electrical signal or data value corresponding to an internal operating state or external environmental state of the electronic device 101. For example, the sensor modules 204 and 219 may include a first sensor module 204 (e.g., a proximity sensor) and/or a second sensor module (not shown) (e.g., a fingerprint sensor), which is disposed on the first surface 210A of the housing 210, and/or a third sensor module 219 and/or a fourth sensor module (e.g., a fingerprint sensor) disposed on the second surface 210B of the housing 210. The fingerprint sensor may be disposed on the second surface 210B or side surface 210C as well as the first surface 210A (e.g., the display 220) of the housing 210. The electronic device 101 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212, and 213 may include a first camera device 205 disposed on the first surface 210A of the electronic device 101, and a second camera device 212 and/or a flash 213 disposed on the second surface 210B. The camera devices 205 and 212 may include one or more lenses, an image sensor, and/or an image signal processor. The flash 213 may include, e.g., a light emitting diode (LED) or a xenon lamp. In an embodiment, two or more lenses (infrared cameras, wide-angle and telephoto lenses) and image sensors may be disposed on one surface of the electronic device 101. In an embodiment, flash 213 may emit infrared light. The infrared light emitted by the flash 213 and reflected by the subject may be received through the third sensor module 219. The electronic device 101 or the processor of the electronic device 101 may detect depth information about the subject based on the time point when the infrared light is received from the third sensor module 219.

The key input device 217 may be disposed on the side surface 210C of the housing 210. In an embodiment, the electronic device 101 may exclude all or some of the above-mentioned key input devices 217 and the excluded key input devices 217 may be implemented in other forms, e.g., as soft keys, on the display 220. In an embodiment, the key input device may include the sensor module disposed on the second surface 210B of the housing 210.

The light emitting device 206 may be disposed on, e.g., the first surface 210A of the housing 210. The light emitting device 206 may provide, e.g., information about the state of the electronic device 101 in the form of light. In an embodiment, the light emitting device 206 may provide a light source that interacts with, e.g., the camera module 205. The light emitting device 206 may include, e.g., an light emitting diode (LED), an infrared (IR) LED, or a xenon lamp.

The connector holes 208 and 209 may include a first connector hole 208 for receiving a connector (e.g., a universal serial bus (USB) connector) for transmitting or receiving power and/or data to/from an external electronic device and/or a second connector hole 209 (e.g., an earphone jack) for receiving a connector for transmitting or receiving audio signals to/from the external electronic device.

FIG. 4 is a front exploded perspective view illustrating an electronic device according to an embodiment of the disclosure;

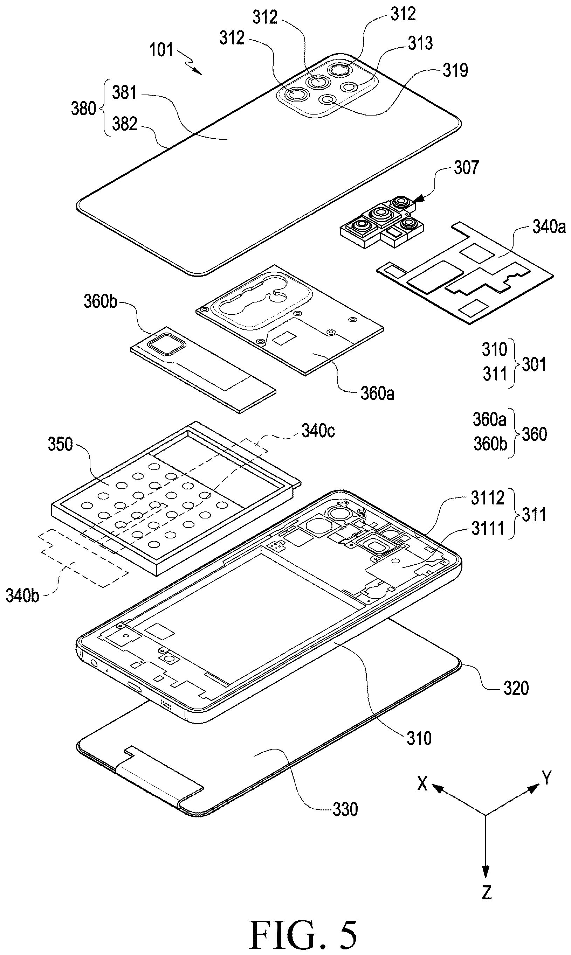

FIG. 5 is a rear exploded perspective view illustrating an electronic device according to an embodiment of the disclosure.

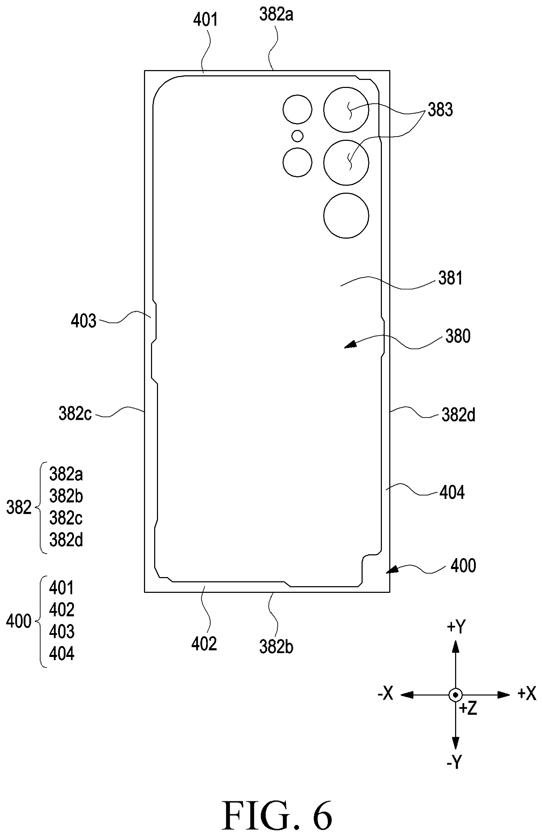

The embodiments of FIGS. 4 and 5 may be combined with the embodiments of FIGS. 1 to 3, or the embodiments of FIGS. 6 to 15.

Referring to FIGS. 4 and 5, an electronic device 101 (e.g., the electronic device 101 of FIG. 1 or FIG. 2) may include a side structure 310, a first supporting member 311 (e.g., a bracket), a front plate 320 (e.g., the front plate 202 of FIG. 1), a display 330 (e.g., the display 220 of FIG. 1), at least one printed circuit board (or a board assembly) 340a or 340b, a battery 350, a second supporting member 360 (e.g., a rear case), an antenna, a camera assembly 307, and a rear plate 380 (e.g., the rear plate 211 of FIG. 2). When the plurality of printed circuit boards 340a and 340b are included, the electronic device 101 may include at least one flexible printed circuit board 340c to electrically connect different printed circuit boards. For example, the printed circuit boards 340a and 340b may include a first circuit board 340a disposed above the battery 350 and a second circuit board 340b disposed under the battery 350, and the flexible printed circuit board 340c may electrically connect the first circuit board 340a and the second circuit board 340b.

According to an embodiment, the electronic device 101 may exclude at least one (e.g., the first supporting member 311 or the second supporting member 360) of the components or may add other components. At least one of the components of the electronic device 101 may be the same or similar to at least one of the components of the electronic device 101 of FIG. 1 or 2 and no duplicate description is made below.

At least a portion of the first supporting member 311 may be provided in a flat plate shape. In an embodiment, the first supporting member 311 may be disposed inside the electronic device 101 to be connected with the side structure 310 or integrated with the side structure 310. The first supporting member 311 may be formed of, e.g., a metallic material and/or non-metallic material (e.g., polymer). When the first supporting member 311 is at least partially formed of a metallic material, a portion of the side structure 310 or the first supporting member 311 may function as an antenna. The display 330 may be joined onto one surface of the first supporting member 311, and the printed circuit boards 340a and 340b may be joined onto the opposite surface of the first supporting member 311. A processor, memory, and/or interface may be mounted on the printed circuit boards 340a and 340b. The processor may include one or more of, e.g., a central processing unit, an application processor, a graphic processing device, an image signal processing, a sensor hub processor, or a communication processor.

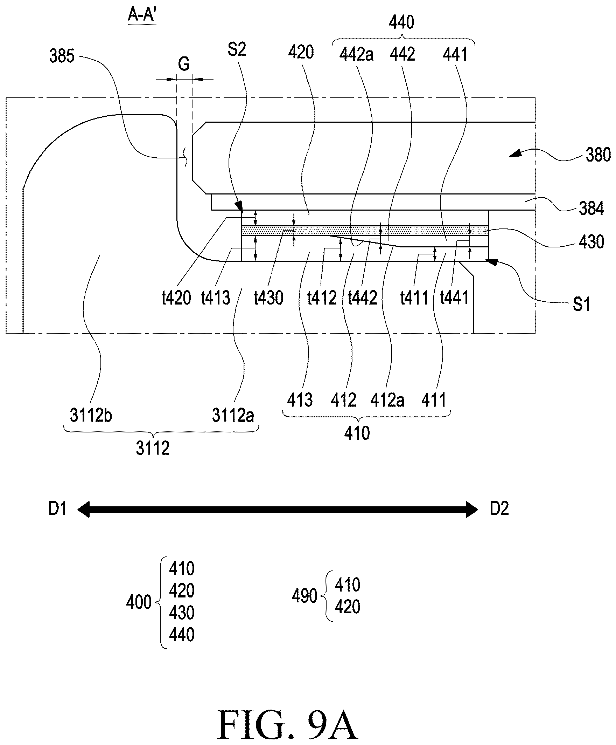

The first supporting member 311 may be referred to as a "supporting member." The housing 301 may include a supporting member 311. The supporting member 311 may face the front plate 320. The supporting member 311 may face the rear plate 380. The supporting member 311 may be coupled to the front plate 320 or the rear plate 380 through an adhesive member (e.g., 400 of FIG. 9A). The supporting member 311 may be formed of reinforced plastic or metal.

The supporting member 311 may include a support body 3111 The support body 3111 may have a flat plate shape. The support body 3111 may provide a space in which the battery 350 or the printed circuit boards 340a and 340b are disposed.

The supporting member 311 may include an end portion 3112. The end portion 3112 may be integrally formed with the support body 3111. The end portion 3112 may be formed along the circumference of the support body 3111. The end portion 3112 may extend along the circumference of the side structure 310. The end portion 3112 may be integrally formed with the side structure 310.

The front plate 320 may be coupled to the supporting member 311 through an adhesive member (e.g., 400 of FIG. 9A). The front plate 320 may be referred to as a "cover" or a "rear cover."

The rear plate 380 may be referred to as a "cover" or "rear cover." The cover 380 may face the supporting member 311. The cover 380 may be formed of reinforced plastic or reinforced glass in which a film (e.g., 384 of FIGS. 9A to 9G) is laminated.

The cover 380 may include a cover body 381. The cover body 381 may have a flat plate shape. The cover body 381 may face the support body 3111.

The cover 380 may include a cover edge 382. The cover edge 382 may be integrally formed with the cover body 381. The cover edge 382 may extend in a direction in which the end portion 3112 of the supporting member 311 extends. The cover edge 382 may face the end portion 3112 of the supporting member 311. The cover edge 382 may be coupled to the end portion 3112 of the supporting member 311 through an adhesive member (e.g., 400 of FIG. 9A) (the adhesive member may be referred to as a "bonding member"). The cover edge 382 may be referred to as an "adhesive portion."

According to an embodiment, the first supporting member 311 and the side structure 310 may be collectively referred to as a front case or a housing 301. According to an embodiment, the housing 301 may be generally understood as a structure for receiving, protecting, or disposing the printed circuit boards 340a and 340b or the battery 350. In an embodiment, the housing 301 may be understood as including a structure that the user may visually or tactfully recognize from the exterior of the electronic device 101, e.g., the side structure 310, the front plate 320, and/or the rear plate 380. The housing 301 may include a side structure 310, a first supporting member 311, a front plate 320, and a rear plate 380. In an embodiment, the 'front or rear surface of the housing 301' may refer to the first surface 210A of FIG. 1 or the second surface 210B of FIG. 2. In an embodiment, the first supporting member 311 may be disposed between the front plate 320 (e.g., the first surface 210A of FIG. 1) and the rear plate 380 (e.g., the second surface 210B of FIG. 2) and may function as a structure for placing an electrical/electronic component, such as the printed circuit boards 340a and 340b or the camera assembly 307.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

The second supporting member 360 may include, e.g., an upper supporting member 360a and a lower supporting member 360b. In an embodiment, the upper supporting member 360a, together with a portion of the first supporting member 311, may be disposed to surround the printed circuit boards 340a and 340b (e.g., the first circuit board 340a). For example, the upper supporting member 360a of the second supporting member 360 may be disposed to face the first supporting member 311 with the first circuit board 340a interposed therebetween. In an embodiment, the lower supporting member 360b of the second supporting member 360 may be disposed to face the first supporting member 311 with the second circuit board 340b interposed therebetween. A circuit device (e.g., a processor, a communication module, or memory) implemented in the form of an integrated circuit chip or various electrical/electronic components may be disposed on the printed circuit boards 340a and 340b. According to an embodiment, the printed circuit boards 340a and 340b may receive an electromagnetic shielding environment from the second supporting member 360. In an embodiment, the lower supporting member 360b may be utilized as a structure in which electrical/electronic components, such as a speaker module and an interface (e.g., a USB connector, an SD card/MMC connector, or an audio connector) may be disposed. In an embodiment, electrical/electronic components, such as a speaker module and an interface (e.g., a USB connector, an SD card/MMC connector, or an audio connector) may be disposed on an additional printed circuit board (not shown). For example, the lower supporting member 360b, together with the other part of the first supporting member 311, may be disposed to surround the additional printed circuit board. The speaker module or interface disposed on the additional printed circuit board (not shown) or the lower supporting member 360b may be disposed corresponding to the audio module 207 or connector holes 208 and 309 of FIG. 1.

The battery 350 may be a device for supplying power to at least one component of the electronic device 101. The battery 189 may include, e.g., a primary cell which is not rechargeable, a secondary cell which is rechargeable, or a fuel cell. At least a portion of the battery 350 may be disposed on substantially the same plane as the printed circuit boards 340a and 340b. The battery 350 may be integrally or detachably disposed inside the electronic device 101.

Although not shown, the antenna may include a conductor pattern implemented on the surface of the second supporting member 360 through, e.g., laser direct structuring. In an embodiment, the antenna may include a printed circuit pattern formed on the surface of the thin film. The thin film-type antenna may be disposed between the rear plate 380 and the battery 350. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. In an embodiment of the present invention, another antenna structure may be formed by a portion or combination of the side structure 310 and/or the first supporting member 311.

According to an embodiment, the camera assembly 307 may include at least one camera module. Inside the electronic device 101, the camera assembly 307 (or at least one camera module) may receive at least a portion of the light incident through the optical hole or the camera windows 312, 313, and 319. In an embodiment, the camera assembly 307 may be disposed on the first supporting member 311 in a position adjacent to the printed circuit boards 340a and 340b. In an embodiment, the camera module(s) of the camera assembly 307 may be generally aligned with either one of the camera windows 312, 313, and 319 and be a least partially surrounded by the second supporting member 360 (e.g., the upper supporting member 360a).

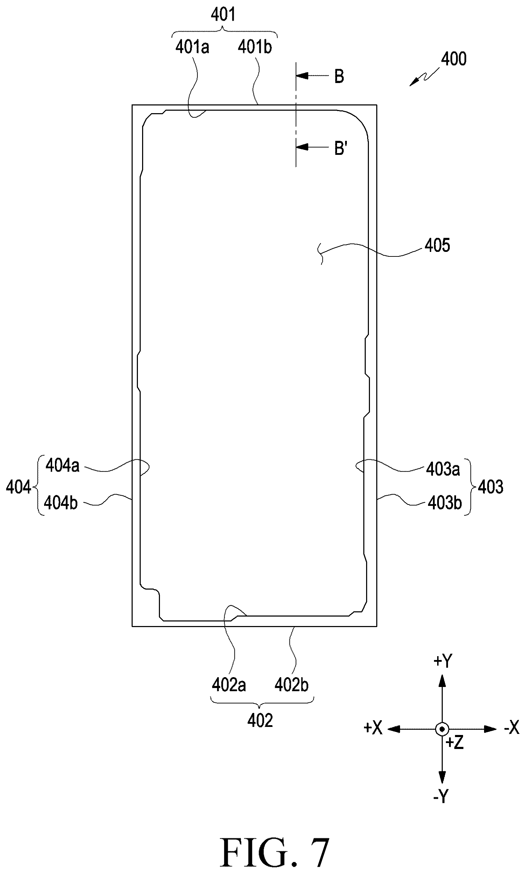

FIG. 6 illustrates that a cover 380 coupled to an adhesive member 400 is separated according to an embodiment. FIG. 7 illustrates that an adhesive member 400 is separated according to an embodiment.

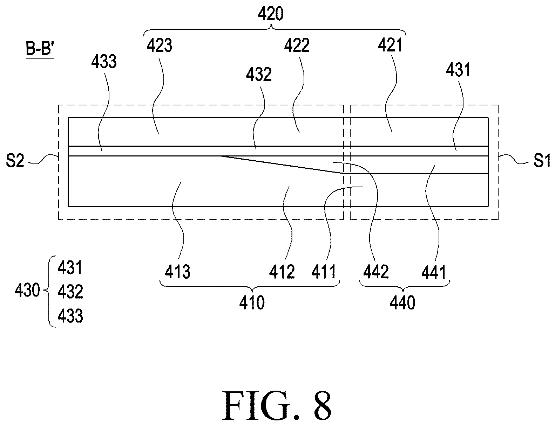

The embodiments of FIGS. 6 and 7 may be combined with the embodiments of FIGS. 1 to 5. The embodiments of FIGS. 6 and 7 may be combined with the embodiments of FIGS. 8 to 15.

Referring to FIGS. 6 and 7, an electronic device may include an adhesive member 400. The configuration of the adhesive member 400 of FIGS. 6 and 7 may be identical in whole or portion to the configuration of the adhesive member of FIGS. 2 to 5. The adhesive member 400 may be referred to as a "bonding member."

According to an embodiment, the adhesive member 400 may be attached to the cover 380. The adhesive member 400 may be detachably coupled to the cover 380.

According to an embodiment, the adhesive member 400 may extend along an edge (e.g., the cover edge 382) of the cover 380. The adhesive member 400 may have a closed loop shape. The cover 380 may have a rectangular plate shape, and the adhesive member 400 may have a rectangular closed loop shape having an empty space therein.

According to an embodiment, the cover 380 may include a cover edge 382. The cover edge 382 may be referred to as an "edge." The cover edge 382 may extend along the circumference of the cover body 381.

According to an embodiment, the cover edge 382 may include an upper edge 382a. The upper edge 382a may be positioned on one side (e.g., in the Y+ direction) of the cover body 381. The upper edge 382a may be referred to as a "first cover edge."

According to an embodiment, the cover edge 382 may include a lower edge 382b. The lower edge 382b may be positioned on one side (e.g., in the Y-direction) of the cover body 381. The lower edge 382b may be referred to as a "second cover edge."

According to an embodiment, the cover edge 382 may include a first side edge 382c. The first side edge 382c may be positioned on one side (e.g., in the X-direction) of the cover body 381. The first side edge 382c may be referred to as a "third cover edge."

According to an embodiment, the cover edge 382 may include a second side edge 382d. The second side edge 382d may be positioned on one side (e.g., in the X+ direction) of the cover body 381. The second side edge 382d may be referred to as a "fourth cover edge."

According to an embodiment, the cover edge 382 may include an upper edge 382a, a lower edge 382b, a first side edge 382c, and a second side edge 382d. The upper edge 382a, the lower edge 382b, the first side edge 382c, and the second side edge 382d may be integrally formed.

According to an embodiment, the adhesive member 400 may be disposed to correspond to the cover edge 382. The adhesive member 400 may extend along a direction in which the cover edge 382 extends.

According to an embodiment, the adhesive member 400 may include an upper adhesive portion 401. The upper adhesive portion 401 may be positioned on one side (e.g., in the Y+ direction) of the cover body 381. The upper adhesive portion 401 may be coupled to the upper edge 382a. The upper adhesive portion 401 may be referred to as a "first adhesive portion."

According to an embodiment, the adhesive member 400 may include a lower adhesive portion 402. The lower adhesive portion 402 may be positioned on one side (e.g., in the Y-direction) of the cover body 381. The lower adhesive portion 402 may be coupled to the lower edge 382b. The lower adhesive portion 402 may be referred to as a "second adhesive portion."

According to an embodiment, the adhesive member 400 may include a first side adhesive portion 403. The first side adhesive portion 403 may be positioned on one side (e.g., in the X-direction) of the cover body 381. The first side adhesive portion 403 may be coupled to the first side edge 382c. The first side adhesive portion 403 may be referred to as a "third adhesive portion."

According to an embodiment, the adhesive member 400 may include a second side adhesive portion 404. The second side adhesive portion 404 may be positioned on one side (e.g., in the X+ direction) of the cover body 381. The second side adhesive portion 404 may be coupled to the second side edge 382d. The second side adhesive portion 404 may be referred to as a "fourth adhesive portion."

According to an embodiment, the adhesive member 400 may include an upper adhesive portion 401, a lower adhesive portion 402, a first side adhesive portion 403, and a second side adhesive portion 404. The upper adhesive portion 401, the lower adhesive portion 402, the first side adhesive portion 403, and the second side adhesive portion 404 may be integrally formed.

According to an embodiment, the cover 380 may include a lens hole 383. The lens hole 383 may be open in the cover body 381. A plurality of lens holes 383 may be formed to be spaced apart from each other. The lens hole 383 may be positioned more adjacent to the upper edge 382a than the lower edge 382b. The lens hole 383 may be positioned more adjacent to the upper adhesive portion 401 than the lower adhesive portion 402.

According to an embodiment, the adhesive member 400 may have a rectangular closed loop shape having a space (e.g., 405 of FIG. 7) therein. The upper adhesive portion 401, the lower adhesive portion 402, the first side adhesive portion 403, and the second side adhesive portion 404 may surround the space 405. The space 405 surrounded by the upper adhesive portion 401, the lower adhesive portion 402, the first side adhesive portion 403, and the second side adhesive portion 404 may be referred to as an "opening."

According to an embodiment, the upper adhesive portion 401 may include a first upper adhesive portion 401a (first upper adhesive portion). The first upper adhesive portion 401a may face the opening 405.

According to an embodiment, the upper adhesive portion 401 may include a second upper adhesive portion 401b. The second upper adhesive portion 401b may face an outer side of the adhesive member 400.

According to an embodiment, the first upper adhesive portion 401a may be disposed between the opening 405 and the second upper adhesive portion 401b. The first upper adhesive portion 401a may be integrally formed with the second upper adhesive portion 401b. The first upper adhesive portion 401a may be referred to as an "inner adhesive portion." The second upper adhesive portion 401b may be referred to as an "outer adhesive portion."

According to an embodiment, the lower adhesive portion 402 may include a first lower adhesive portion 402a. The first lower adhesive portion 402a may face the opening 405.

According to an embodiment, the lower adhesive portion 402 may include a second lower adhesive portion 402b. The second lower adhesive portion 402b may face an outer side of the adhesive member 400.

According to an embodiment, the first lower adhesive portion 402a may be disposed between the opening 405 and the second lower adhesive portion 402b. The first lower adhesive portion 402a may be integrally formed with the second lower adhesive portion 402b. The first lower adhesive portion 402a may be referred to as an "inner adhesive portion." The second lower adhesive portion 402b may be referred to as an "outer adhesive portion."

According to an embodiment, the first side adhesive portion 403 may include a 1-1 side adhesive portion 403a. The 1-1 side adhesive portion 403a may face the opening 405.

According to an embodiment, the first side adhesive portion 403 may include a 1-2 side adhesive portion 403b. The 1-2 side adhesive portion 403b may face an outer side of the adhesive member 400.

According to an embodiment, the 1-1 side adhesive portion 403a may be disposed between the opening 405 and the 1-2 side adhesive portion 403b. The 1-1 side adhesive portion 403a may be integrally formed with the 1-2 side adhesive portion 403b. The 1-1 side adhesive portion 403a may be referred to as an "inner adhesive portion." The 1-2 side adhesive portion 403b may be referred to as an "outer adhesive port."

According to an embodiment, the second side adhesive portion 404 may include a 2-1 side adhesive portion 404a. The 2-1 side adhesive portion 404a may face the opening 405.

According to an embodiment, the second side adhesive portion 404 may include a 2-2 side adhesive portion 404b. The 2-2 side adhesive portion 404b may face an outer side of the adhesive member 400.

According to an embodiment, the 2-1 side adhesive portion 404a may be disposed between the opening 405 and the 2-2 side adhesive portion 404b. The 2-1 side adhesive portion 404a may be integrally formed with the 2-2 side adhesive portion 404b. The 2-1 side adhesive portion 404a may be referred to as an "inner adhesive portion." The 2-2 side adhesive portion 404b may be referred to as an "outer adhesive port."

According to an embodiment, the adhesive member 400 may include an inner adhesive portion (e.g., 401a, 402a, 403a, 404a). The inner adhesive portion (e.g., 401a, 402a, 403a, 404a) may face the opening 405. The inner adhesive portion (e.g., 401a, 402a, 403a, 404a) may mean a portion of the adhesive member 400 positioned in the first area S1 illustrated in FIG. 8. The inner adhesive portion (e.g., 401a, 402a, 403a, 404a) may be referred to as an "inner adhesive layer."

According to an embodiment, the adhesive member 400 may include an outer adhesive portion (e.g., 401b, 402b, 403b, 404b). The outer adhesive portion (e.g., 401b, 402b, 403b, 404b) may face the outer side of the adhesive member 400. The outer adhesive portion (e.g., 401b, 402b, 403b, 404b) may mean a portion of the adhesive member 400 positioned in the second area S2 illustrated in FIG. 8. The outer adhesive portion (e.g., 401b, 402b, 403b, 404b) may be referred to as an "outer adhesive layer."

According to an embodiment, the structure of the adhesive member (e.g., 400, 500, 600, 700, 800, 900; 7000) according to embodiments (e.g., FIG. 9A to FIG. 9G) of the disclosure may be applied to the outer adhesive portion (e.g., 401b, 402b, 403b, 404b). For example, the outer adhesive portion (e.g., 401b, 402b, 403b, 404b) of the adhesive member according to an embodiment of the disclosure may include both the first area S1 and the second area S2 illustrated in FIG. 8. However, the structure of the adhesive member (e.g., 400, 500, 600, 700, 800, 900) may be applied to both the outer adhesive portion (e.g., 401b, 402b, 403b, 404b) and the inner adhesive portion (e.g., 401a, 402a, 403a, 404a). For example, the adhesive member according to an embodiment of the disclosure may be divided into the first area S1 including the inner adhesive portion (e.g., 401a, 402a, 403a, 404a) and the second area S2 including the outer adhesive portion (e.g., 401b, 402b, 403b, 404b).

FIG. 8 is a cross-sectional view of an adhesive member 400 taken along line B-B' of FIG. 7 according to an embodiment.

The embodiment of FIG. 8 may be combined with the embodiments of FIGS. 1 to 7. The embodiment of FIG. 8 may be combined with the embodiments of FIGS. 9A to 9G and FIGS. 10 to 15.

Referring to FIG. 8, the electronic device may include an adhesive member 400. The configuration of the adhesive member 400 of FIG. 8 may be identical in whole or portion to the configuration of the adhesive member of FIGS. 2 to 7.

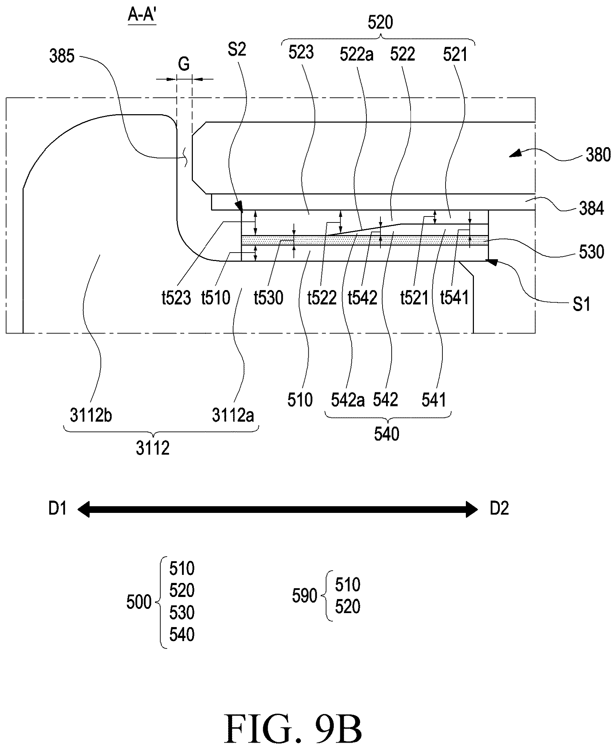

The description of the adhesive member 400 described with reference to FIG. 8 may be equally applied to the adhesive members (e.g., 500, 600, 700, 800, 900; 7000) disclosed in FIGS. 9A and 9B to 9G. The description of the adhesive member 400 made with reference to FIG. 8 is an example of the adhesive member 400 illustrated in FIG. 9A, and the components (e.g., 410, 420, 430, 440) constituting the adhesive member 400 described in FIG. 8 may be configured in the same manner as the adhesive members (e.g., 500, 600, 700, 800, 900; 7000) illustrated in FIG. 9B to FIG. 9G.

According to an embodiment, the adhesive member 400 may include the first area S1. Referring to FIG. 7, the first area S1 may mean an area facing the opening 405.

According to an embodiment, the adhesive member 400 may include the second area S2. Referring to FIG. 7, the second area S2 may mean an area facing the outer side of the adhesive member 400. Referring to FIG. 9A, the second area S2 may mean an area extending from the first area S1 toward the edge 3112b of the supporting member (e.g., 311 of FIG. 5). Referring to FIG. 9A, the second area S2 may mean an area positioned between the supporting member (e.g., 311 of FIG. 5) and the first area S1. In this case, the first area S1 may be defined as an area positioned farther from the edge 3112b of the supporting member (e.g., 311 of FIG. 5) than the second area S2.

According to an embodiment, the adhesive member 400 may include a first adhesive layer 410. The first adhesive layer 410 may be attached to a supporting member (e.g., 311 of FIG. 5).

According to an embodiment, the adhesive member 400 may include a second adhesive layer 420. The second adhesive layer 420 may be attached to the cover (e.g., 380 of FIG. 5).

According to an embodiment, the adhesive member 400 may include a first adhesive layer 410, a second adhesive layer 420, and a base layer 430. The first adhesive layer 410 and the second adhesive layer 420 may be spaced apart from each other. The base layer 430 may be disposed between the first adhesive layer 410 and the second adhesive layer 420.

According to an embodiment, the adhesive member 400 may include a first adhesive layer 410, a second adhesive layer 420, a base layer 430, and a reinforcement layer 440. The reinforcement layer 440 may be applied to the base layer 430. The base layer 430 may be spaced apart from the first adhesive layer 410. The reinforcement layer 440 may be disposed between the base layer 430 and the first adhesive layer 410. As illustrated in FIG. 9B, the base layer 530 may be spaced apart from the second adhesive layer 520. In this case, the reinforcement layer 540 may be disposed between the base layer 530 and the second adhesive layer 520.

According to an embodiment, the first adhesive layer 410 may include a first inner adhesive portion 411. The first inner adhesive portion may be referred to as a "first inner adhesive layer." The first inner adhesive portion 411 may be a portion of the first adhesive layer 410 positioned in the first area S1.

According to an embodiment, the first adhesive layer 410 may include a first middle adhesive portion 412. The first middle adhesive portion may be referred to as a "first middle adhesive layer." The first middle adhesive portion 412 may connect the first inner adhesive portion 411 and the first outer adhesive portion 413. The first outer adhesive portion may be referred to as a "first outer adhesive layer."

According to an embodiment, the first adhesive layer 410 may include a first outer adhesive portion 413. The first outer adhesive portion 413 may be a portion of the first adhesive layer 410 positioned in the second area S2.

According to an embodiment, the second adhesive layer 420 may include a second inner adhesive portion 421. The second inner adhesive portion may be referred to as a "second inner adhesive layer." The second inner adhesive portion 421 may be a portion of the second adhesive layer 420 positioned in the first area S1.

According to an embodiment, the second adhesive layer 420 may include a second middle adhesive portion 422. The second middle adhesive portion may be referred to as a "second middle adhesive layer." The second middle adhesive portion 422 may connect the second inner adhesive portion 421 and the second outer adhesive portion 423. The second outer adhesive portion may be referred to as a "second outer adhesive layer."

According to an embodiment, the second adhesive layer 420 may include a second outer adhesive portion 423. The second outer adhesive portion 423 may be a portion of the second adhesive layer 420 positioned in the second area S2.

According to an embodiment, the first adhesive layer 410 and the second adhesive layer 420 may be spaced apart from each other. The first inner adhesive portion 411 may correspond to the second inner adhesive portion 421. The first middle adhesive portion 412 may correspond to the second middle adhesive portion 422. The first outer adhesive portion 413 may correspond to the second outer adhesive portion 423.

According to an embodiment, the base layer 430 may include an inner base portion 431. The inner base portion 431 may be a portion of the base layer 430 positioned in the first area S1. The inner substrate portion 431 may be referred to as an inner base layer.

According to an embodiment, the base layer 430 may include a middle base portion 432. The middle base portion 432 may connect the inner base portion 431 and the outer base portion 433. The middle substrate portion 432 may be referred to as a "middle base layer."

According to an embodiment, the base layer 430 may include an outer base portion 433. The outer substrate portion 433 may be a portion of the base layer 430 positioned in the second area S2. The outer substrate portion 433 may be referred to as an outer base layer.

According to an embodiment, the base layer 430 may be disposed between the first adhesive layer 410 and the second adhesive layer 420. The inner base portion 431 may be disposed between the first inner adhesive portion 411 and the second inner adhesive portion 421. The middle base portion 432 may be disposed between the first middle adhesive portion 412 and the second middle adhesive portion 422. The outer substrate portion 433 may be disposed between the first outer adhesive portion 413 and the second outer adhesive portion 423.

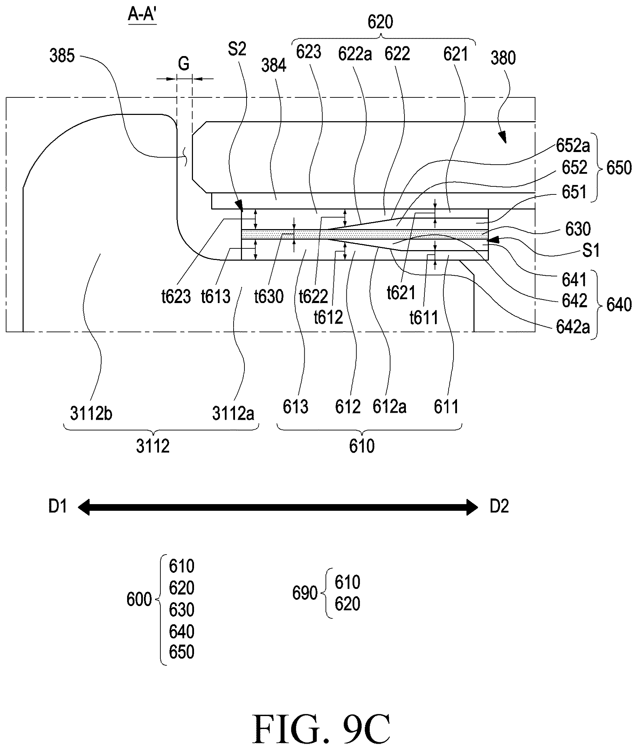

According to an embodiment, the reinforcement layer 440 may be disposed between the base layer 430 and the first adhesive layer 410. The reinforcement layer (e.g., 540 of FIG. 9B) may be disposed between the base layer 530 and the second adhesive layer 520, as illustrated in FIG. 9B. The reinforcement layers (e.g., 640 and 650 of FIG. 9C) may be disposed between the base layer 630 and the first adhesive layer 610 and between the base layer 630 and the second adhesive layer 620, respectively, as illustrated in FIG. 9C.

According to an embodiment, the reinforcement layer 440 may include a first reinforcing portion 441. The first reinforcing portion 441 may be a portion of the reinforcement layer 440 positioned in the first area S1. The first reinforcing portion 441 may be disposed between the first inner adhesive portion 411 and the inner base portion 431. The first reinforcing portion 441 may be referred to as a "first reinforcement layer."

According to an embodiment, the reinforcement layer 440 may include a second reinforcing portion 442. The second reinforcing portion 442 may be a portion of the reinforcement layer 440 positioned in the second area S2. The second reinforcing portion 442 may be disposed between the first middle adhesive portion 412 and the middle base portion 432. The second reinforcing portion 442 may be referred to as a "second reinforcement layer."

According to an embodiment, the first reinforcing portion 441 and the second reinforcing portion 442 may be integrally formed. The thickness of the reinforcement layer 440 may decrease from the first reinforcing portion 441 to the second reinforcing portion 442.

FIGS. 9A to 9G are partial cross-sectional views of an electronic device (e.g., 101 of FIG. 1) taken along line A-A' of FIG. 3 according to different embodiments.

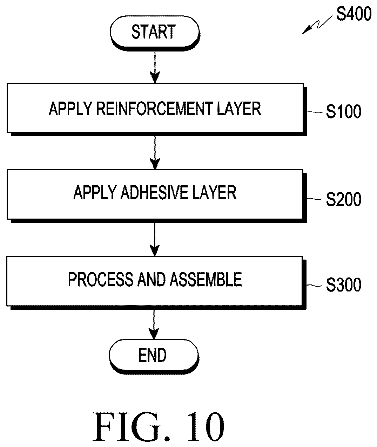

The embodiments of FIGS. 9A to 9G may be combined with the embodiments of FIGS. 1 to 8. The embodiments of FIGS. 9A to 9G may be combined with the embodiments of FIGS. 10 to 15.

Referring to FIGS. 9A to 9G, the electronic devices may include adhesive members 400, 500, 600, 700, 800, 900; 7000. The configuration of the adhesive member of FIG. 9A to FIG. 9G may be identical in whole or portion to the configuration of the adhesive member of FIG. 2 to FIG. 8.

According to an embodiment, the adhesive member (e.g., 400, 500, 600, 700, 800, 900) may be disposed between the cover 380 and the end portion 3112 of the supporting member (e.g., 311 of FIG. 5). The adhesive member (e.g., 400, 500, 600, 700, 800, 900) may couple the end portion 3112 of the supporting member (e.g., 311 of FIG. 5) to the cover 380. The adhesive member (e.g., 400, 500, 600, 700, 800, 900) may be attached to each of the end portion 3112 of the supporting member (e.g., 311 of FIG. 5) and the cover 380. The adhesive member (e.g., 400, 500, 600, 700, 800, 900) may be disposed between the film 384 and the end portion 3112 of the supporting member (e.g., 311 of FIG. 5). The adhesive member (e.g., 400, 500, 600, 700, 800, 900) may couple the end portion 3112 of the supporting member (e.g., 311 of FIG. 5) to the film 384. The adhesive member (e.g., 400, 500, 600, 700, 800, 900) may be attached to each of the end portion 3112 of the supporting member (e.g., 311 of FIG. 5) and the film 384.

According to an embodiment, the electronic device (e.g., 101 of FIG. 1) may include a film 384. The film 384 may be disposed on one surface of the cover 380. The film 384 may face the end portion 3112 of the supporting member (e.g., 311 of FIG. 5). The film 384 may include an adhesive layer (OCA), a polymer film layer, a deposition layer, or a printing layer. The polymer film layer may be formed of at least one of polyethylene terephthalate (PET), polymethyl methacrylate (PDMA), polycarbonate (PC), or thermoplastic polyurethane (TPU). However, the configuration of the polymer film layer is not limited thereto. The deposition layer may be a coating layer for implementing color and metallic texture. The deposition layer may be formed of an inorganic material, and the inorganic material may be SiO₂ or Ti₃O₅. The deposition layer may be formed of a material including at least one of Al₂O₃, indium, or Nb₂O₅. However, the configuration of the deposition layer is not limited to the above-described configuration.

According to an embodiment, the end portion 3112 (hereinafter, referred to as an "end portion") of the supporting member (e.g., 311 of FIG. 5) may include a support plate 3112a. The support plate 3112a may be spaced apart from the cover 380. The support plate 3112a may face the film 384. When the film 384 is not present according to an embodiment of the disclosure, the support plate 3112a may face the cover 380. The adhesive member (e.g., 400, 500, 600, 700, 800, 900) may be disposed between the support plate 3112a and the film 384. The adhesive member (e.g., 400, 500, 600, 700, 800, 900) may couple the support plate 3112a to the film 384.

According to an embodiment, the end portion 3112 of the supporting member (e.g., 311 of FIG. 5) may include an edge 3112b. The edge 3112b may protrude in a direction (e.g., a direction substantially perpendicular to) crossing the extending direction of the support plate 3112a. Referring to FIG. 5, the edge 3112b may extend along the circumference of the supporting member 311. Referring to FIG. 5, the edge 3112b may be disposed to surround the cover 380. Referring to FIG. 5, the edge 3112b may form an outer circumferential surface of the housing 301. The edge 3112b may surround the cover 380, and may be spaced apart from the cover 380 by a predetermined gap G. A gap 385 may be formed between the edge 3112b and the cover 380.

According to an embodiment, directions (e.g., D1 and D2) for describing a positional relationship between components (e.g., 301, 311, 380 of FIG. 5 and 312, 380, 400, 500, 600, 700, 800, 900; 7000 of FIG. 9A to FIG. 9G) are defined. A first direction D1 is defined. Referring to FIG. 5, the first direction D1 may be a direction toward the outside of the housing 301 from the end portion 3112. Referring to FIGS. 9A to 9G, the first direction D1 may be a direction from the adhesive member (e.g., 400, 500, 600, 700, 800, 900; 7000) toward the edge 3112b of the end portion 3112. A second direction D2 is defined. Referring to FIG. 5, the second direction D2 may be a direction from the end portion 3112 toward the inside of the housing 301. Referring to FIGS. 9A to 9G, the second direction D2 may be a direction from the edge 3112b of the end portion 3112 toward the adhesive member (e.g., 400, 500, 600, 700, 800, 900; 7000). The above-described concepts for the first direction D1 and the second direction D2 may be equally applied to the embodiments of FIGS. 1 to 8. Further, the above-described concepts for the first direction D1 and the second direction D2 may be equally applied to the embodiments of FIGS. 10 to 15. The first direction D1 may be referred to as an "outward direction of the housing." The second direction D2 may be referred to as an "inner direction of the housing."

According to an embodiment, the second area S2 may extend from the first area S1 in the first direction D1. The second area S2 may be positioned between the first area S1 and the edge 3112b.

Referring to FIG. 9A, the adhesive member 400 may include a first adhesive layer 410, a second adhesive layer 420, a base layer 430, and a reinforcement layer 440. The description of each of the first adhesive layer 410, the second adhesive layer 420, the base layer 430, and the reinforcement layer 440 may be the same as the description of the structures 410, 420, 430, and 440 made with reference to FIG. 8.

According to an embodiment, the adhesive member 400 may include an adhesive layer 490. The adhesive layer 490 may couple the supporting member (e.g., 311 of FIG. 5) to the cover 380. The adhesive layer 490 may be attached to each of the supporting member (e.g., 311 of FIG. 5) and the film 384. One surface of the adhesive layer 490 may be attached to the supporting member (e.g., 311 of FIG. 5), and the other surface of the adhesive layer 490 may be attached to the film 384. When the film 384 is not disposed according to an embodiment of the disclosure, one surface of the adhesive layer 490 may be attached to the supporting member (e.g., 311 of FIG. 5), and the other surface of the adhesive layer 490 may be attached to the cover 380.

According to an embodiment, the adhesive layer 490 may include a first adhesive layer 410. The adhesive layer 490 may include a second adhesive layer 420.

According to an embodiment, the thickness of the adhesive layer 490 may increase toward the first direction D1. The thickness of the adhesive layer 490 may increase toward the edge 3112b. The thickness of the adhesive layer 490 in the first area S1 may be smaller than the thickness of the adhesive layer 490 in the second area S2. The proportion of the thickness of the adhesive layer 490 in the total thickness of the adhesive member 400 may increase toward the first direction D1. The proportion of the thickness of the adhesive layer 490 in the total thickness of the adhesive member 400 may be larger in the second area S2 than in the first area S1.

According to an embodiment, the thickness of at least one of the first adhesive layer 410 or the second adhesive layer 420 may increase toward the first direction D1. At least one of the first adhesive layer 410 and the second adhesive layer 420 may have a larger thickness in the second area S2 than in the first area S1. For example, the thickness of the first adhesive layer 410 may be larger in the second area S2 than in the first area S1. Further, the thickness of the first adhesive layer 410 may increase toward the first direction D1. In this case, the thicknesses of the second adhesive layer 420 and the base layer 430 may be constant in the length direction of the adhesive member 400. In this case, the reinforcement layer 440 may be disposed between the base layer 430 and the first adhesive layer 410.

According to an embodiment, the first adhesive layer 410 may include a first inner adhesive portion 411, a first middle adhesive portion 412, and a first outer adhesive portion 413. The description of the components (e.g., 411, 412, and 413) made above with reference to FIG. 8 may be the same as the description of the components (e.g., 411, 412, and 413 of FIG. 8). The first adhesive layer 410 may include an adhesive interface 412a. The adhesive interface 412a may be formed on the first middle adhesive portion 412. The adhesive interface 412a may contact the reinforcement layer 440. The adhesive interface 412a may be formed to be inclined. The adhesive interface 412a may be bent toward the base layer 430 from the first inner adhesive portion 411 to the first outer adhesive portion 413. A spacing distance between the adhesive interface 412a and the base layer 430 may decrease from the first area S1 to the second area S2.

According to an embodiment, the reinforcement layer 440 may include a first reinforcing portion 441 and a second reinforcing portion 442. The description of the components (e.g., 441, 442) may be the same as the description of the components (e.g., 441, 442) made with reference to FIG. 8. The reinforcement layer 440 may include a reinforcing portion interface 442a. The reinforcing portion interface 442a may be formed on the second reinforcing portion 442. The reinforcing portion interface 442a may contact the adhesive interface 412a. The reinforcing portion interface 442a may be formed to be inclined. The reinforcing portion interface 442a may extend obliquely along the adhesive interface 412a. The reinforcing portion interface 442a may approach the base layer 430 away from the first reinforcing portion 441. A spacing distance between the reinforcing portion interface 442a and the base layer 430 may decrease from the first area S1 to the second area S2.

As described above, due to the inclined shape of the adhesive interface 412a and the reinforcing portion interface 442a, the first adhesive layer 410 may be formed to have different thicknesses in the first area S1 and the second area S2, respectively.

According to an embodiment, the thickness t411 of the first inner adhesive portion 411 may be smaller than the thickness t413 of the first outer adhesive portion 413. The thickness t411 of the first inner adhesive portion 411 may be smaller than the thickness t412 of the first middle adhesive portion 412. The thickness (e.g., t411, t412, t413) of the first adhesive layer 410 may gradually increase from the first inner adhesive portion 411 (or the first area S1) to the first outer adhesive portion 413 (or the second area S2).

According to an embodiment, the thickness t441 of the first reinforcing portion 441 may be larger than the thickness t442 of the second reinforcing portion 442. The thickness (e.g., t441, t442) of the reinforcement layer 440 may gradually decrease from the first reinforcing portion 441 (or the first area S1) to the second reinforcing portion 442 (or the second area S2).

According to an embodiment, the thickness t420 of the second adhesive layer 420 may be formed to be equal in each of the first area S1 and the second area S2. The thickness t420 of the second adhesive layer 420 may be constant in the length direction of the adhesive member 400.

According to an embodiment, the thickness t430 of the base layer 430 may be formed to be the same in each of the first area S1 and the second area S2. The thickness t430 of the base layer 430 may be constant in the length direction of the adhesive member 400.

Referring to FIG. 9B, the adhesive member 500 may include a first adhesive layer 510, a second adhesive layer 520, a base layer 530, and a reinforcement layer 540. The description of each of the first adhesive layer 510, the second adhesive layer 520, the base layer 530, and the reinforcement layer 540 may be the same as the description of the structures 410, 420, 430, and 440 made with reference to FIG. 8.

According to an embodiment, the adhesive member 500 may include an adhesive layer 590. The adhesive layer 590 may couple the supporting member (e.g., 311 of FIG. 5) to the cover 380. The adhesive layer 590 may be attached to each of the supporting member (e.g., 311 of FIG. 5) and the film 384. One surface of the adhesive layer 590 may be attached to the supporting member (e.g., 311 of FIG. 5), and the other surface of the adhesive layer 590 may be attached to the film 384. When the film 384 is not disposed according to an embodiment of the disclosure, one surface of the adhesive layer 590 may be attached to the supporting member (e.g., 311 of FIG. 5), and the other surface of the adhesive layer 590 may be attached to the cover 380.

According to an embodiment, the adhesive layer 590 may include a first adhesive layer 510. The adhesive layer 590 may include a second adhesive layer 520.

According to an embodiment, the thickness of the adhesive layer 590 may increase toward the first direction D1. The thickness of the adhesive layer 590 may increase toward the edge 3112b. The thickness of the adhesive layer 590 in the first area S1 may be smaller than the thickness of the adhesive layer 590 in the second area S2. The proportion of the thickness of the adhesive layer 590 in the total thickness of the adhesive member 500 may increase toward the first direction D1. The proportion of the thickness of the adhesive layer 590 in the total thickness of the adhesive member 500 may be larger in the second area S2 than in the first area S1.

According to an embodiment, the thickness of at least one of the first adhesive layer 510 or the second adhesive layer 520 may increase toward the first direction D1. At least one of the first adhesive layer 510 and the second adhesive layer 520 may have a larger thickness in the second area S2 than in the first area S1. For example, the thickness of the second adhesive layer 520 may be larger in the second area S2 than in the first area S1. Further, the thickness of the second adhesive layer 520 may increase toward the first direction D1. In this case, the thicknesses of the first adhesive layer 510 and the base layer 530 may be constant in the length direction of the adhesive member 500. In this case, the reinforcement layer 540 may be disposed between the base layer 530 and the second adhesive layer 520.

According to an embodiment, the second adhesive layer 520 may include a second inner adhesive portion 521, a second middle adhesive portion 522, and a second outer adhesive portion 523. The description of the components (e.g., 521, 522, and 523) made above with reference to FIG. 8 may be the same as the description of the components (e.g., 421, 422, and 423 of FIG. 8). The second adhesive layer 520 may include an adhesive interface 522a. The adhesive interface 522a may be formed on the second middle adhesive portion 522. The adhesive interface 522a may contact the reinforcement layer 540. The adhesive interface 522a may be formed to be inclined. The adhesive interface 522a may be bent toward the base layer 530 from the second inner adhesive portion 521 to the second outer adhesive portion 523. A spacing distance between the adhesive interface 522a and the base layer 530 may decrease from the first area S1 to the second area S2.

According to an embodiment, the reinforcement layer 540 may include a first reinforcing portion 541 and a second reinforcing portion 542. The description of the components (e.g., 541, 542) may be the same as the description of the components (e.g., 441, 442) made with reference to FIG. 8. The reinforcement layer 540 may include a reinforcing portion interface 542a. The reinforcing portion interface 542a may be formed on the second reinforcing portion 542. The reinforcing portion interface 542a may contact the adhesive interface 522a. The reinforcing portion interface 542a may be formed to be inclined. The reinforcing portion interface 542a may extend obliquely along the adhesive interface 522a. The reinforcing portion interface 542a may approach the base layer 530 away from the first reinforcing portion 541. A spacing distance between the reinforcing portion interface 542a and the base layer 530 may decrease from the first area S1 to the second area S2.

As described above, due to the inclined shape of the adhesive interface 522a and the reinforcing portion interface 542a, the second adhesive layer 520 may be formed to have different thicknesses in the first area S1 and the second area S2, respectively.

According to an embodiment, the thickness t521 of the second inner adhesive portion 521 may be smaller than the thickness t523 of the second outer adhesive portion 523. The thickness t521 of the second inner adhesive portion 521 may be smaller than the thickness t522 of the second middle adhesive portion 522. The thickness (e.g., t521, t522, t523) of the second adhesive layer 520 may gradually increase from the second inner adhesive portion 521 (or the first area S1) to the second outer adhesive portion 523 (or the second area S2).

According to an embodiment, the thickness t541 of the first reinforcing portion 541 may be larger than the thickness t542 of the second reinforcing portion 542. The thickness (e.g., t541, t542) of the reinforcement layer 540 may gradually decrease from the first reinforcing portion 541 (or, the first area S1) to the second reinforcing portion 542 (or, the second area S2).

According to an embodiment, the thickness t510 of the first adhesive layer 510 may be formed to be equal in each of the first area S1 and the second area S2. The thickness t510 of the first adhesive layer 510 may be constant in the length direction of the adhesive member 500.

According to an embodiment, the thickness t530 of the base layer 530 may be formed to be equal in each of the first area S1 and the second area S2. The thickness t530 of the base layer 530 may be constant in the length direction of the adhesive member 500.

Referring to FIG. 9C, the adhesive member 600 may include a first adhesive layer 610, a second adhesive layer 620, a base layer 630, a first reinforcement layer 640, and a second reinforcement layer 650. The description of each of the first adhesive layer 610, the second adhesive layer 620, and the base layer 630 may be the same as the description of the structures 410, 420, and 430 made with reference to FIG. 8. The description of each of the first reinforcement layer 640 and the second reinforcement layer 650 may be the same as the description of the reinforcement layer 440 made with reference to FIG. 8.

According to an embodiment, the adhesive member 600 may include an adhesive layer 690. The adhesive layer 690 may couple the supporting member (e.g., 311 of FIG. 5) to the cover 380. The adhesive layer 690 may be attached to each of the supporting member (e.g., 311 of FIG. 5) and the film 384. One surface of the adhesive layer 690 may be attached to the supporting member (e.g., 311 of FIG. 5), and the other surface of the adhesive layer 690 may be attached to the film 384. When the film 384 is not disposed according to an embodiment of the disclosure, one surface of the adhesive layer 690 may be attached to the supporting member (e.g., 311 of FIG. 5), and the other surface of the adhesive layer 690 may be attached to the cover 380.

According to an embodiment, the adhesive layer 690 may include a first adhesive layer 610. The adhesive layer 690 may include a second adhesive layer 620.

According to an embodiment, the thickness of the adhesive layer 690 may increase toward the first direction D1. The thickness of the adhesive layer 690 may increase toward the edge 3112b. The thickness of the adhesive layer 690 in the first area S1 may be smaller than the thickness of the adhesive layer 690 in the second area S2. The proportion of the thickness of the adhesive layer 690 in the total thickness of the adhesive member 600 may increase toward the first direction D1. The proportion of the thickness of the adhesive layer 690 in the total thickness of the adhesive member 600 may be larger in the second area S2 than in the first area S1.

According to an embodiment, the thickness of at least one of the first adhesive layer 610 or the second adhesive layer 620 may increase toward the first direction D1. At least one of the first adhesive layer 610 and the second adhesive layer 620 may have a larger thickness in the second area S2 than in the first area S1. For example, the thicknesses of the first adhesive layer 610 and the second adhesive layer 620 may be larger in the second area S2 than in the first area S1. Further, the thicknesses of the first adhesive layer 610 and the second adhesive layer 620 may increase toward the first direction D1. In this case, the thickness of the base layer 630 may be constant in the length direction of the adhesive member 600. In this case, the first reinforcement layer 640 may be disposed between the first adhesive layer 610 and the base layer 630, and the second reinforcement layer 650 may be disposed between the second adhesive layer 620 and the base layer 630.

According to an embodiment, the first adhesive layer 610 may include a first inner adhesive portion 611, a first middle adhesive portion 612, and a first outer adhesive portion 613. The description of the components (e.g., 611, 612, and 613) made above with reference to FIG. 8 may be the same as the description of the components (e.g., 411, 412, and 413 of FIG. 8). The first adhesive layer 610 may include a first adhesive interface 612a. The first adhesive interface 612a may be formed on the first middle adhesive portion 612. The first adhesive interface 612a may contact the first reinforcement layer 640. The first adhesive interface 612a may be formed to be inclined. The first adhesive interface 612a may be bent toward the base layer 630 from the first inner adhesive portion 611 to the first outer adhesive portion 613. A spacing distance between the first adhesive interface 612a and the base layer 630 may decrease from the first area S1 to the second area S2.

According to an embodiment, the second adhesive layer 620 may include a second inner adhesive portion 621, a second middle adhesive portion 622, and a second outer adhesive portion 623. The description of the components (e.g., 621, 622, and 623) made above with reference to FIG. 8 may be the same as the description of the components (e.g., 421, 422, and 423 of FIG. 8). The second adhesive layer 620 may include a second adhesive interface 622a. The second adhesive interface 622a may be formed on the second middle adhesive portion 622. The adhesive interface 622a may contact the second reinforcement layer 650. The second adhesive interface 622a may be formed to be inclined. The second adhesive interface 622a may be bent toward the base layer 630 from the second inner adhesive portion 621 to the second outer adhesive portion 623. A spacing distance between the second adhesive interface 622a and the base layer 630 may decrease from the first area S1 to the second area S2.

According to an embodiment, the first reinforcement layer 640 may include a 1-1 reinforcing portion 641 and a 1-2 reinforcing portion 642. The 1-1 reinforcing portion 641 may be referred to as a "1-1 reinforcement layer," and the 1-2 reinforcing portion 642 may be referred to as a "1-2 reinforcement layer." The description of the components (e.g., 641, 642) may be the same as the description of the components (e.g., 441, 442) made with reference to FIG. 8. The first reinforcement layer 640 may include a first reinforcing portion interface 642a. The first reinforcing portion interface 642a may be formed on the 1-2 reinforcing portion 642. The first reinforcing portion interface 642a may contact the first adhesive interface 612a. The first reinforcing portion interface 642a may be formed to be inclined. The first reinforcing portion interface 642a may extend obliquely along the first adhesive interface 612a. The first reinforcing portion interface 642a may approach the base layer 630 away from the 1-1 reinforcing portion 641. A spacing distance between the first reinforcing portion interface 642a and the base layer 630 may decrease from the first area S1 to the second area S2.

According to an embodiment, the second reinforcement layer 650 may include a 2-1 reinforcing portion and a 2-2 reinforcing portion 652. The 2-1 reinforcing portion 651 may be referred to as a "2-1 reinforcement layer," and the 2-2 reinforcing portion 652 may be referred to as a "2-2 reinforcement layer." The description of the components (e.g., 651, 652) may be the same as the description of the components (e.g., 441, 442) made with reference to FIG. 8. The second reinforcement layer 650 may include a second reinforcing portion interface 652a. The second reinforcing portion interface 652a may be formed on the 2-2 reinforcing portion 652. The second reinforcing portion interface 652a may contact the second adhesive interface 622a. The second reinforcing portion interface 652a may be formed to be inclined. The second reinforcing portion interface 652a may extend obliquely along the second adhesive interface 622a. The second reinforcing portion interface 652a may approach the base layer 630 away from the 2-1 reinforcing portion 651. A spacing distance between the second reinforcing portion interface 652a and the base layer 630 may decrease from the first area S1 to the second area S2.

As described above, due to the inclined shape of the adhesive interface (e.g., 612a, 622a) and the reinforcing portion interface (e.g., 642a, 652a), the first adhesive layer 610 and the second adhesive layer 620 may be formed to have different thicknesses in the first and second areas S1 and S2, respectively.

According to an embodiment, the thickness t611 of the first inner adhesive portion 611 may be smaller than the thickness t613 of the first outer adhesive portion 613. The thickness t611 of the first inner adhesive portion 611 may be smaller than the thickness t612 of the first middle adhesive portion 612. The thicknesses (e.g., t611, t612, t613) of the first adhesive layer 610 may gradually increase from the first inner adhesive portion 611 (or the first area S1) to the first outer adhesive portion 613 (or the second area S2).

According to an embodiment, the thickness t621 of the second inner adhesive portion 621 may be smaller than the thickness t623 of the second outer adhesive portion 623. The thickness t621 of the second inner adhesive portion 621 may be smaller than the thickness t622 of the second middle adhesive portion 622. The thickness (e.g., t621, t622, t623) of the second adhesive layer 620 may gradually increase from the second inner adhesive portion 621 (or the first area S1) to the second outer adhesive portion 623 (or the second area S2).

According to an embodiment, the thickness t630 of the base layer 630 may be formed to be equal in each of the first area S1 and the second area S2. The thickness t630 of the base layer 630 may be constant in the length direction of the adhesive member 600.

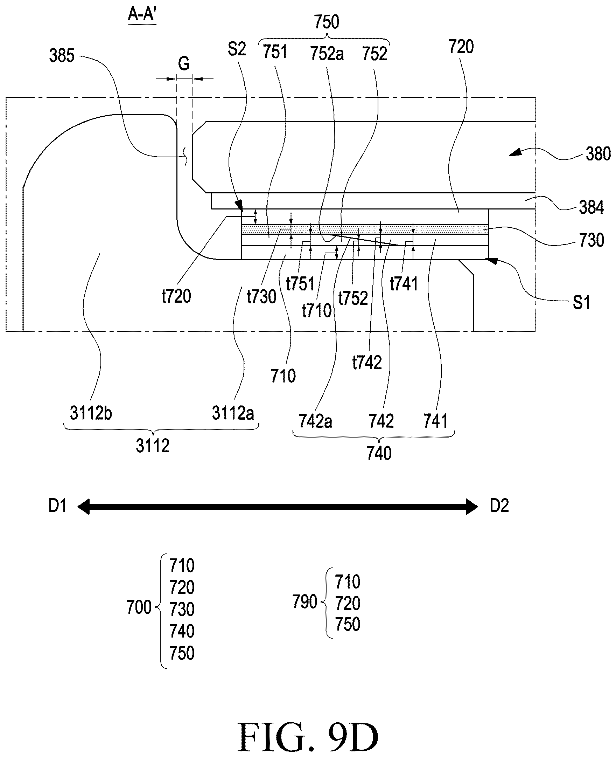

Referring to FIG. 9D, the adhesive member 700 may include a first adhesive layer 710, a second adhesive layer 720, a base layer 730, and a reinforcement layer 740. The description of each of the first adhesive layer 710, the second adhesive layer 720, the base layer 730, and the reinforcement layer 740 may be the same as the description of the structures 410, 420, 430, and 440 made with reference to FIG. 8.

According to an embodiment, the adhesive member 700 may include an adhesive layer 790. The adhesive layer 790 may couple the supporting member (e.g., 311 of FIG. 5) to the cover 380. The adhesive layer 790 may be attached to each of the supporting member (e.g., 311 of FIG. 5) and the film 384. One surface of the adhesive layer 790 may be attached to the supporting member (e.g., 311 of FIG. 5), and the other surface of the adhesive layer 790 may be attached to the film 384. When the film 384 is not disposed according to an embodiment of the disclosure, one surface of the adhesive layer 790 may be attached to the supporting member (e.g., 311 of FIG. 5), and the other surface of the adhesive layer 790 may be attached to the cover 380.

According to an embodiment, the adhesive layer 790 may include a first adhesive layer 710. The adhesive layer 790 may include a second adhesive layer 720. The adhesive layer 790 may include a buffer layer 750. In this case, the buffer layer 750 may be included in the first adhesive layer 710. For example, the buffer layer 750 may be one of components of the first adhesive layer 710.

According to an embodiment, the thickness of the adhesive layer 790 may increase toward the first direction D1. The thickness of the adhesive layer 790 may increase toward the edge 3112b. The thickness of the adhesive layer 790 in the first area S1 may be smaller than the thickness of the adhesive layer 790 in the second area S2. The proportion of the thickness of the adhesive layer 790 in the total thickness of the adhesive member 700 may increase toward the first direction D1. The proportion of the thickness of the adhesive layer 790 in the total thickness of the adhesive member 700 may be larger in the second area S2 than in the first area S1.

According to an embodiment, the thickness of at least one of the first adhesive layer 710 or the second adhesive layer 720 may increase toward the first direction D1. At least one of the first adhesive layer 710 and the second adhesive layer 720 may have a larger thickness in the second area S2 than in the first area S1.

According to an embodiment, the adhesive member 700 may include a buffer layer 750. The buffer layer 750 may be formed of a material having high viscosity. The buffer layer 750 may have substantially the same physical property as that of the first adhesive layer 710. The buffer layer 750 may be disposed between the first adhesive layer 710 and the base layer 730. In this case, the first adhesive layer 710 and the base layer 730 may be spaced apart from each other in the thickness direction of the adhesive member 700, and the buffer layer 750 may be disposed in the space between the first adhesive layer 710 and the base layer 730. The buffer layer 750 may be disposed to face the reinforcement layer 740.

According to an embodiment, the buffer layer 750 may include a first buffer portion 751. The first buffer portion 751 may be referred to as a "first buffer layer." The first buffer portion 751 may be disposed to face the edge 3112b. The buffer layer 750 may include a second buffer portion 752. The second buffer portion 752 may be referred to as a "second buffer layer." The second buffer portion 752 may be disposed to face the reinforcing portion 740.

According to an embodiment, the first buffer portion 751 may be positioned between the edge 3112b and the second buffer portion 752. The second buffer portion 752 may extend from the first buffer portion 751 toward the reinforcement layer 740.

According to an embodiment, the buffer layer 750 may include a buffer portion interface 752a. The buffer portion interface 752a may be formed in the second buffer portion 752. The buffer portion interface 752a may contact the reinforcing portion 740. The buffer portion interface 752a may be formed to be inclined. The buffer portion interface 752a may extend obliquely along the reinforcing portion interface 742a. The buffer portion interface 752a may approach the base layer 730 toward the first buffer portion 751. A spacing distance between the buffer portion interface 752a and the base layer 730 may decrease from the first area S1 to the second area S2.

According to an embodiment, the reinforcement layer 740 may include a first reinforcing portion 741 and a second reinforcing portion 742. The description of the components (e.g., 741, 742) may be the same as the description of the components (e.g., 441, 442) made with reference to FIG. 8. The reinforcement layer 740 may include a reinforcing portion interface 742a. The reinforcing portion interface 742a may be formed on the second reinforcing portion 742. The reinforcing portion interface 742a may contact the buffer portion interface 752a. The reinforcing portion interface 742a may be formed to be inclined. The reinforcing portion interface 742a may extend obliquely along the buffer portion interface 752a. The reinforcing portion interface 742a may approach the base layer 730 away from the first reinforcing portion 741. A spacing distance between the reinforcing portion interface 742a and the base layer 730 may decrease from the first area S1 to the second area S2.

As described above, due to the inclined shape of the buffer portion interface 752a and the reinforcing portion interface 742a, the adhesive layer 790 may be formed to have different thicknesses in the first area S1 and the second area S2, respectively.

According to an embodiment, the thickness t751 of the first buffer portion 751 may be larger than the thickness t752 of the second buffer portion 752. The thickness (e.g., t751, t752) of the buffer layer 750 may gradually increase from the second buffer portion 752 (or the first area S1) to the first buffer portion 751 (or the second area S2).

According to an embodiment, the thickness t741 of the first reinforcing portion 741 may be larger than the thickness t742 of the second reinforcing portion 742. The thickness (e.g., t741, t742) of the reinforcement layer 740 may gradually decrease from the first reinforcing portion 741 (or, the first area S1) to the second reinforcing portion 742 (or, the second area S2).

According to an embodiment, the thickness t710 of the first adhesive layer 710 may be formed to be equal in each of the first area S1 and the second area S2. The thickness t710 of the first adhesive layer 710 may be constant in the length direction of the adhesive member 700.

According to an embodiment, the thickness t720 of the second adhesive layer 720 may be formed to be equal in each of the first area S1 and the second area S2. The thickness t720 of the second adhesive layer 720 may be constant in the length direction of the adhesive member 700.

According to an embodiment, the thickness t730 of the base layer 730 may be formed to be equal in each of the first area S1 and the second area S2. The thickness t730 of the base layer 730 may be constant in the length direction of the adhesive member 700.

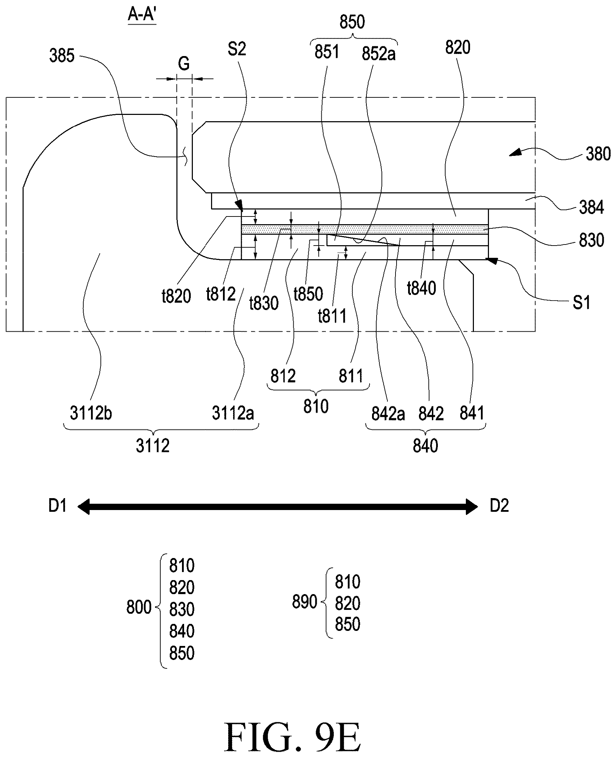

Referring to FIG. 9E, an adhesive member 800 may include a first adhesive layer 810, a second adhesive layer 820, a base layer 830, and a reinforcement layer 840. The description of each of the first adhesive layer 810, the second adhesive layer 820, the base layer 830, and the reinforcement layer 840 may be the same as the description of the structures 410, 420, 430, and 440 made with reference to FIG. 8.

According to an embodiment, the adhesive member 800 may include an adhesive layer 890. The adhesive layer 890 may couple the supporting member (e.g., 311 of FIG. 5) to the cover 380. The adhesive layer 890 may be attached to each of the supporting member (e.g., 311 of FIG. 5) and the film 384. One surface of the adhesive layer 890 may be attached to the supporting member (e.g., 311 of FIG. 5), and the other surface of the adhesive layer 890 may be attached to the film 384. When the film 384 is not disposed according to an embodiment of the disclosure, one surface of the adhesive layer 890 may be attached to the supporting member (e.g., 311 of FIG. 5), and the other surface of the adhesive layer 890 may be attached to the cover 380.

According to an embodiment, the adhesive layer 890 may include a first adhesive layer 810. The adhesive layer 890 may include a second adhesive layer 820. The adhesive layer 890 may include a buffer layer 850. In this case, the buffer layer 850 may be included in the first adhesive layer 810. For example, the buffer layer 850 may be one of components of the first adhesive layer 810.

According to an embodiment, the thickness of the adhesive layer 890 may increase toward the first direction D1. The thickness of the adhesive layer 890 may increase toward the edge 3112b. The thickness of the adhesive layer 890 in the first area S1 may be smaller than the thickness of the adhesive layer 890 in the second area S2. The proportion of the thickness of the adhesive layer 890 in the total thickness of the adhesive member 800 may increase toward the first direction D1. The proportion of the thickness of the adhesive layer 890 in the total thickness of the adhesive member 800 may be larger in the second area S2 than in the first area S1.

According to an embodiment, the thickness of at least one of the first adhesive layer 810 or the second adhesive layer 820 may increase toward the first direction D1. At least one of the first adhesive layer 810 and the second adhesive layer 820 may have a larger thickness in the second area S2 than in the first area S1.

According to an embodiment, the adhesive member 800 may include a buffer layer 850. The buffer layer 850 may be formed of a material having high viscosity. The buffer layer 850 may have substantially the same physical property as that of the first adhesive layer 810. The buffer layer 850 may be disposed between the first adhesive layer 810 and the base layer 830. The buffer layer 850 may be disposed to face the reinforcement layer 840.

According to an embodiment, the buffer layer 850 may include a buffer portion 851. The buffer portion 851 may be disposed to face the reinforcement layer 840.

According to an embodiment, the buffer layer 850 may include a buffer portion interface 852a. The buffer portion interface 852a may contact the reinforcing portion 840. The buffer portion interface 852a may be formed to be inclined. The buffer portion interface 852a may extend obliquely along the reinforcing portion interface 842a. The buffer portion interface 852a may approach the base layer 830 toward the edge 3112b. A spacing distance between the buffer portion interface 852a and the base layer 830 may decrease from the first area S1 to the second area S2.

According to an embodiment, the reinforcement layer 840 may include a first reinforcing portion 841 and a second reinforcing portion 842. The description of the components (e.g., 841, 842) may be the same as the description of the components (e.g., 441, 442) made with reference to FIG. 8. The reinforcement layer 840 may include a reinforcing portion interface 842a. The reinforcing portion interface 842a may be formed on the second reinforcing portion 842. The reinforcing portion interface 842a may contact the buffer portion interface 852a. The reinforcing portion interface 842a may be formed to be inclined. The reinforcing portion interface 842a may extend obliquely along the buffer portion interface 852a. The reinforcing portion interface 842a may approach the base layer 830 away from the first reinforcing portion 841. A spacing distance between the reinforcing portion interface 842a and the base layer 830 may decrease from the first area S1 to the second area S2.

According to an embodiment, the first adhesive layer 810 may include an inner adhesive portion 811. The inner adhesive portion 811 may be a portion of the first adhesive layer 810 positioned in the first area S1. The inner adhesive portion 811 may face the reinforcement layer 840 and the buffer layer 850.

According to an embodiment, the first adhesive layer 810 may include an outer adhesive portion 812. The outer adhesive portion 812 may be a portion of the first adhesive layer 810 positioned in the second area S2. The outer adhesive portion 812 may face the buffer layer 850 and the base layer 830.

According to an embodiment, the outer adhesive portion 812 may be positioned between the edge 3112b and the inner adhesive portion 811. The outer adhesive portion 812 may extend from the inner adhesive portion 811 toward the edge 3112b. The outer adhesive portion 812 may be positioned between the edge 3112b and the buffer layer 850.

According to an embodiment, the reinforcement layer 840 may be disposed between the base layer 830 and the inner adhesive portion 811. The buffer layer 850 may be disposed between the base layer 830 and the inner adhesive portion 811.

According to an embodiment, the thickness t811 of the inner adhesive portion 811 may be smaller than the thickness t812 of the outer adhesive portion 812. The thickness (e.g., t811, t812) of the first adhesive layer 810 may gradually increase from the inner adhesive portion 811 (or the first area S1) to the outer adhesive portion 812 (or the second area S2). However, the inner adhesive portion 811 and the outer adhesive portion 812 may form a step by the circumferential surface of the buffer portion 850.

According to an embodiment, the thickness t850 of the buffer layer 850 may gradually increase toward the outer adhesive portion 812.

According to an embodiment, the thickness t840 of the reinforcement layer 840 may gradually decrease toward the buffer layer 850.

According to an embodiment, the thickness t820 of the second adhesive layer 820 may be formed to be equal in each of the first area S1 and the second area S2. The thickness t820 of the second adhesive layer 820 may be constant in the length direction of the adhesive member 800.

According to an embodiment, the thickness t830 of the base layer 830 may be formed to be equal in each of the first area S1 and the second area S2. The thickness t830 of the base layer 830 may be constant in the length direction of the adhesive member 800.

As described above, due to the inclined shape of the buffer portion interface 852a and the reinforcing portion interface 842a, the adhesive layer 890 may be formed to have different thicknesses in the first area S1 and the second area S2, respectively. Further, as described above, as the first adhesive layer 810 is divided into the inner adhesive portion 811 and the outer adhesive portion 812 with different thicknesses, the adhesive layer 890 may be formed to have different thicknesses in the first and second areas S1 and S2, respectively.

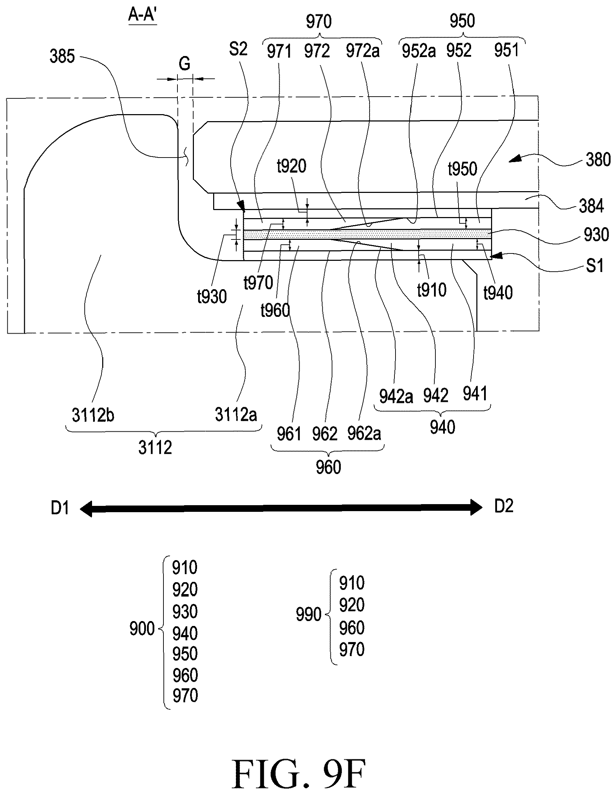

Referring to FIG. 9F, the adhesive member 900 may include a first adhesive layer 910, a second adhesive layer 920, a base layer 930, a first reinforcement layer 940, and a second reinforcement layer 950. The description of each of the first adhesive layer 910, the second adhesive layer 920, and the base layer 930 may be the same as the description of the structures 410, 420, and 430 made with reference to FIG. 8. The description of each of the first reinforcement layer 940 and the second reinforcement layer 950 may be the same as the description of the reinforcement layer 440 made with reference to FIG. 8.

According to an embodiment, the adhesive member 900 may include an adhesive layer 990. The adhesive layer 990 may couple the supporting member (e.g., 311 of FIG. 5) to the cover 380. The adhesive layer 990 may be attached to each of the supporting member (e.g., 311 of FIG. 5) and the film 384. One surface of the adhesive layer 990 may be attached to the supporting member (e.g., 311 of FIG. 5), and the other surface of the adhesive layer 990 may be attached to the film 384. When the film 384 is not disposed according to an embodiment of the disclosure, one surface of the adhesive layer 990 may be attached to the supporting member (e.g., 311 of FIG. 5), and the other surface of the adhesive layer 990 may be attached to the cover 380.

According to an embodiment, the adhesive layer 990 may include a first adhesive layer 910. The adhesive layer 990 may include a second adhesive layer 920. The adhesive layer 990 may include a first buffer layer 960. The adhesive layer 90 may include a second buffer layer 970. In this case, the first buffer layer 960 may be included in the first adhesive layer 910. For example, the first buffer layer 960 may be one of the components of the first adhesive layer 910. Further, the second buffer layer 970 may be included in the second adhesive layer 920. For example, the second buffer layer 970 may be one of the components of the second adhesive layer 920.

According to an embodiment, the thickness of the adhesive layer 990 may increase toward the first direction D1. The thickness of the adhesive layer 990 may increase toward the edge 3112b. The thickness of the adhesive layer 990 in the first area S1 may be smaller than the thickness of the adhesive layer 990 in the second area S2. The proportion of the thickness of the adhesive layer 990 in the total thickness of the adhesive member 900 may increase toward the first direction D1. The proportion of the thickness of the adhesive layer 990 in the total thickness of the adhesive member 900 may be larger in the second area S2 than in the first area S1.

According to an embodiment, the thickness of at least one of the first adhesive layer 910 or the second adhesive layer 920 may increase toward the first direction D1. At least one of the first adhesive layer 910 and the second adhesive layer 920 may have a larger thickness in the second area S2 than in the first area S1.

According to an embodiment, the adhesive member 900 may include a first buffer layer 960. The first buffer layer 960 may be formed of a material having high viscosity. The first buffer layer 960 may have substantially the same physical property as the first adhesive layer 910. The first buffer layer 960 may be disposed between the first adhesive layer 910 and the base layer 930. In this case, the first adhesive layer 910 and the base layer 930 may be spaced apart from each other in the thickness direction of the adhesive member 900, and the first buffer layer 960 may be disposed in the space between the first adhesive layer 910 and the base layer 930. The first buffer layer 960 may be disposed to face the first reinforcement layer 940.

According to an embodiment, the first buffer layer 960 may include a 1-1 buffer portion 961. The 1-1 buffer portion 961 may be referred to as a "1-1 buffer layer." The 1-1 buffer portion 961 may be disposed to face the edge 3112b. The first buffer layer 960 may include a 1-2 buffer portion 962. The 1-2 buffer portion 962 may be referred to as a "1-2 buffer layer." The 1-2 buffer portion 962 may be disposed to face the first reinforcing unit 940.

According to an embodiment, the 1-1 buffer portion 961 may be positioned between the edge 3112b and the 1-2 buffer portion 962. The 1-2 buffer portion 962 may extend from the 1-1 buffer portion 961 toward the first reinforcement layer 940.

According to an embodiment, the first buffer layer 960 may include a first buffer portion interface 962a. The first buffer portion interface 962a may be formed in the 1-2 buffer portion 962. The first buffer portion interface 962a may contact the first reinforcing portion 940. The first buffer portion interface 962a may be formed to be inclined. The first buffer portion interface 962a may extend obliquely along the first reinforcing portion interface 942a. The first buffer portion interface 962a may approach the base layer 930 toward the 1-1 buffer portion 961. A spacing distance between the first buffer portion interface 962a and the base layer 930 may decrease from the first area S1 to the second area S2.

According to an embodiment, the adhesive member 900 may include a second buffer layer 970. The second buffer layer 970 may be formed of a material having high viscosity. The second buffer layer 970 may have substantially the same physical property as the second adhesive layer 920. The second buffer layer 970 may be disposed between the second adhesive layer 920 and the base layer 930. In this case, the second adhesive layer 920 and the base layer 930 may be spaced apart from each other in the thickness direction of the adhesive member 900, and the second buffer layer 970 may be disposed in the space between the second adhesive layer 920 and the base layer 930. The second buffer layer 970 may be disposed to face the second reinforcement layer 950.

According to an embodiment, the second buffer layer 970 may include a 2-1 buffer portion 971. The 2-1 buffer portion 971 may be referred to as a "2-1 buffer layer." The 2-1 buffer portion 971 may be disposed to face the edge 3112b. The second buffer layer 970 may include a 2-2 buffer portion 972. The 2-2 buffer portion 972 may be referred to as a "2-2 buffer layer." The 2-2 buffer portion 972 may be disposed to face the second reinforcing unit 950.

According to an embodiment, the 2-1 buffer portion 971 may be positioned between the edge 3112b and the 2-2 buffer portion 972. The 2-2 buffer portion 972 may extend from the 2-1 buffer portion 971 toward the second reinforcement layer 950.

According to an embodiment, the second buffer layer 970 may include a second buffer portion interface 972a. The second buffer portion interface 972a may be formed in the 2-2 buffer portion 972. The second buffer portion interface 972a may contact the second reinforcing portion 950. The second buffer portion interface 972a may be formed to be inclined. The second buffer portion interface 972a may extend obliquely along the second reinforcing portion interface 952a. The second buffer portion interface 972a may approach the base layer 930 toward the 2-1 buffer portion 971. A spacing distance between the second buffer portion interface 972a and the base layer 930 may decrease from the first area S1 to the second area S2.

According to an embodiment, the first reinforcement layer 940 may include a 1-1 reinforcing portion 941 and a 1-2 reinforcing portion 942. The description of the components (e.g., 941, 942) may be the same as the description of the components (e.g., 441, 442) made with reference to FIG. 8. The first reinforcement layer 940 may include a first reinforcing portion interface 942a. The second reinforcing portion interface 942a may be formed on the 1-1 reinforcing portion 942. The first reinforcing portion interface 942a may contact the first buffer portion interface 962a. The first reinforcing portion interface 942a may be formed to be inclined. The first reinforcing portion interface 942a may extend obliquely along the first buffer portion interface 962a. The first reinforcing portion interface 942a may approach the base layer 930 away from the 1-1 reinforcing portion 941. A spacing distance between the first reinforcing portion interface 942a and the base layer 930 may decrease from the first area S1 to the second area S2.

According to an embodiment, the second reinforcement layer 950 may include a 2-1 reinforcing portion 951 and a 2-2 reinforcing portion 952. The description of the components (e.g., 951, 952) may be the same as the description of the components (e.g., 441, 442) made with reference to FIG. 8. The second reinforcement layer 950 may include a second reinforcing portion interface 952a. The second reinforcing portion interface 952a may be formed on the 2-2 reinforcing portion 952. The second reinforcing portion interface 952a may contact the second buffer portion interface 972a. The second reinforcing portion interface 952a may be formed to be inclined. The second reinforcing portion interface 952a may extend obliquely along the second buffer portion interface 972a. The second reinforcing portion interface 952a may approach the base layer 930 away from the 2-1 reinforcing portion 951. A spacing distance between the second reinforcing portion interface 952a and the base layer 930 may decrease from the first area S1 to the second area S2.

As described above, due to the inclined shape of the buffer portion interface (e.g., 962a, 972a) and the reinforcing portion interface (e.g., 942a, 952a), the adhesive layer 990 may be formed to have different thicknesses in the first and second areas S1 and S2, respectively.

According to an embodiment, the thickness t960 of the first buffer layer 960 may gradually increase toward the edge 3112b. The thickness t960 of the first buffer layer 960 may gradually increase from the first area S1 to the second area S2.

According to an embodiment, the thickness t970 of the second buffer layer 970 may gradually increase toward the edge 3112b. The thickness t970 of the second buffer layer 970 may gradually increase from the first area S1 to the second area S2.

According to an embodiment, the thickness t940 of the first reinforcement layer 940 may gradually decrease toward the edge 3112b. The thickness t940 of the first reinforcement layer 940 may gradually decrease from the first area S1 to the second area S2.

According to an embodiment, the thickness t950 of the second reinforcement layer 950 may gradually decrease toward the edge 3112b. The thickness t950 of the second reinforcement layer 950 may gradually decrease from the first area S1 to the second area S2.

According to an embodiment, the thickness t910 of the first adhesive layer 910 may be formed to be equal in each of the first area S1 and the second area S2. The thickness t910 of the first adhesive layer 910 may be constant in the length direction of the adhesive member 900.

According to an embodiment, the thickness t920 of the second adhesive layer 920 may be formed to be equal in each of the first and second areas S1 and S2. The thickness t920 of the second adhesive layer 920 may be constant in the length direction of the adhesive member 900.

According to an embodiment, the thickness t930 of the base layer 930 may be formed to be equal in each of the first area S1 and the second area S2. The thickness t930 of the base layer 930 may be constant in the length direction of the adhesive member 900.

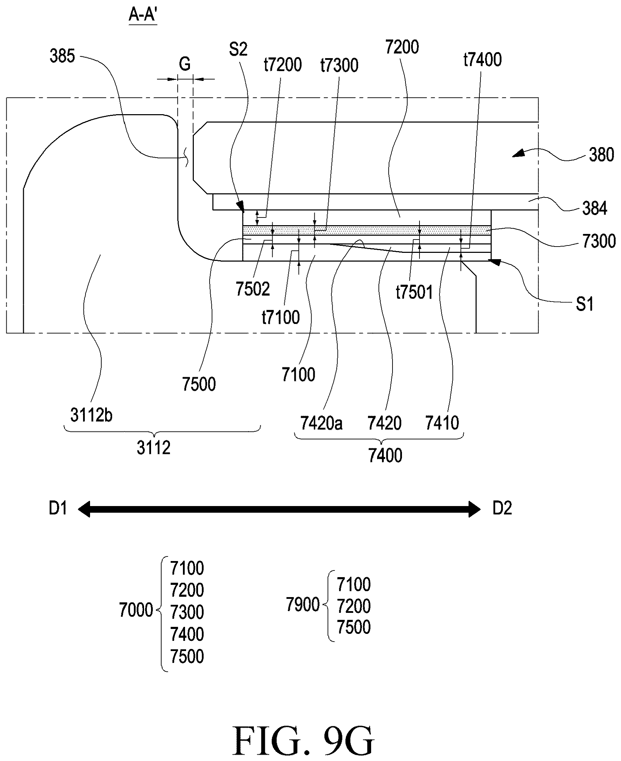

Referring to FIG. 9G, the adhesive member 7000 may include a first adhesive layer 7100, a second adhesive layer 7200, a base layer 7300, and a reinforcement layer 7400. The description of each of the first adhesive layer 7100, the second adhesive layer 7200, the base layer 7300, and the reinforcement layer 7400 may be the same as the description of the structures 410, 420, 430, and 440 made with reference to FIG. 8.

According to an embodiment, the adhesive member 7000 may include an adhesive layer 7900. The adhesive layer 7900 may couple the supporting member (e.g., 311 of FIG. 5) to the cover 380. The adhesive layer 7900 may be attached to each of the supporting member (e.g., 311 of FIG. 5) and the film 384. One surface of the adhesive layer 7900 may be attached to the supporting member (e.g., 311 of FIG. 5), and the other surface of the adhesive layer 7900 may be attached to the film 384. When the film 384 is not disposed according to an embodiment of the disclosure, one surface of the adhesive layer 7900 may be attached to the supporting member (e.g., 311 of FIG. 5), and the other surface of the adhesive layer 7900 may be attached to the cover 380.

According to an embodiment, the adhesive layer 7900 may include a first adhesive layer 7100. The adhesive layer 7900 may include a second adhesive layer 7200. The adhesive layer 7900 may include a buffer layer 7500.

According to an embodiment, the thickness of the adhesive layer 7900 may increase toward the first direction D1. The thickness of the adhesive layer 7900 may increase toward the edge 3112b. The thickness of the adhesive layer 7900 in the first area S1 may be smaller than the thickness of the adhesive layer 7900 in the second area S2. The proportion of the thickness of the adhesive layer 7900 in the total thickness of the adhesive member 7000 may increase toward the first direction D1. The proportion of the thickness of the adhesive layer 7900 in the total thickness of the adhesive member 7000 may be larger in the second area S2 than in the first area S1.

According to an embodiment, the thickness of at least one of the first adhesive layer 7100 or the second adhesive layer 7200 may increase toward the first direction D1. At least one of the first adhesive layer 7100 and the second adhesive layer 7200 may have a larger thickness in the second area S2 than in the first area S1.

According to an embodiment, the adhesive member 7000 may include a buffer layer 7500. The buffer layer 7500 may be formed of a material having high viscosity. The buffer layer 7500 may have substantially the same physical property as that of the first adhesive layer 7100. The buffer layer 7500 may be disposed between the first adhesive layer 7100 and the base layer 7300. In this case, the first adhesive layer 7100 and the base layer 7300 may be spaced apart from each other in the thickness direction of the adhesive member 7000, and the buffer layer 7500 may be disposed in the space between the first adhesive layer 7100 and the base layer 7300. The buffer layer 7500 may be disposed to face the reinforcement layer 7400.

According to an embodiment, the buffer layer 7500 may be disposed between the base layer 7300 and the reinforcement layer 7400. The buffer layer 7500 may be disposed between the base layer 7300 and the first adhesive layer 7100. One surface of the buffer layer 7500 may face the base layer 7300, and the other surface of the buffer layer 7500 may face the reinforcement layer 7400 or the first adhesive layer 7100. The buffer layer 7500 may have a constant thickness in the length direction of the adhesive member 7000. The thickness t7501 of the buffer layer 7500 in the first area S1 may be substantially the same as the thickness t7502 of the buffer layer 7500 in the second area S2.

According to an embodiment, the reinforcement layer 7400 may include a first reinforcing portion 7410 and a second reinforcing portion 7420. The description of the components (e.g., 7410, 7420) may be the same as the description of the components (e.g., 441, 442) made with reference to FIG. 8. The reinforcement layer 7400 may include a reinforcing portion interface 7420a. The reinforcing portion interface 7420a may be formed on the second reinforcing portion 7420. The reinforcing portion interface 7420a may contact the first adhesive layer 7100. The reinforcing portion interface 7420a may be formed to be inclined. The reinforcing portion interface 7420a may extend obliquely along a portion of the first adhesive layer 7100. The reinforcing portion interface 7420a may approach the buffer layer 7500 away from the first reinforcing portion 7410. A spacing distance between the reinforcing portion interface 742a and the buffer layer 7500 may decrease from the first area S1 to the second area S2.

According to an embodiment, the thickness t7100 of the first adhesive layer 7100 may increase from the first area S1 to the second area S2.

According to an embodiment, the thickness t7200 of the second adhesive layer 7200 may be formed to be equal in each of the first area S1 and the second area S2. The thickness t7200 of the second adhesive layer 7200 may be constant in the length direction of the adhesive member 7000.

According to an embodiment, the thickness t7300 of the base layer 7300 may be formed to be equal in each of the first area S1 and the second area S2. The thickness t7300 of the base layer 7300 may be constant in the length direction of the adhesive member 7000.

According to an embodiment, the thickness t7400 of the reinforcement layer 7400 may decrease from the first area S1 to the second area S2.

FIG. 10 is a view illustrating a method S400 for manufacturing an adhesive member (e.g., 400, 500, 600, 700, 800, 900; 7000 of FIG. 9A to FIG. 9G) according to the embodiment of the disclosure.

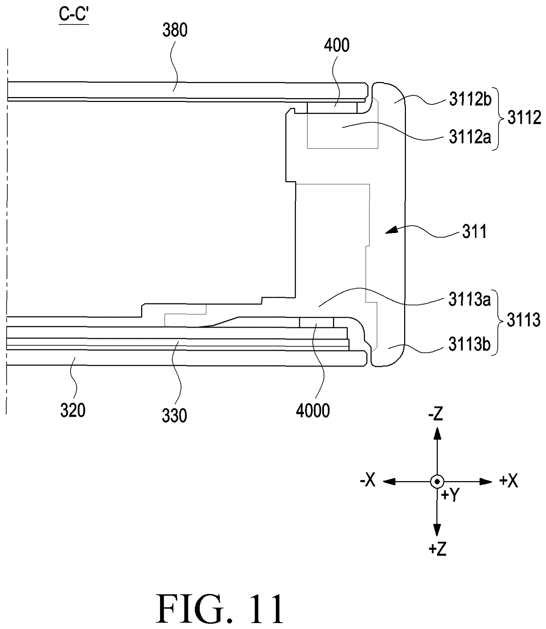

The manufacturing method S400 described in connection with FIG. 10 may be combined with the embodiments of FIGS. 1 to 8. The manufacturing method S400 described in connection with FIG. 10 may be combined with the embodiment of FIGS. 9A to 9G. The manufacturing method S400 described in connection with FIG. 10 may be combined with the embodiments of FIGS. 11 to 15.

The configuration of the adhesive member described in connection with FIG. 10 may be identical in whole or portion to the configuration of the adhesive member 400 of FIGS. 2 to 8. The configuration of the adhesive member described in FIG. 10 may be identical in whole or portion to the configuration of the adhesive member 400, 500, 600, 700, 800, 900; 7000 of FIGS. 9A to 9G.

According to an embodiment, the manufacturing method S400 of the adhesive member may include a step S100 of applying the reinforcement layer. In this case, the reinforcement layer may be the reinforcement layer 440 of FIGS. 8 and 9A, the reinforcement layer 540 of FIG. 9B, the first and second reinforcement layers 640 and 650 of FIG. 9C, the reinforcement layer 740 of FIG. 9D, the reinforcement layer 840 of FIG. 9E, or the first and second reinforcement layers 940 and 950 of FIG. 9F. In the step S100 of applying the reinforcement layer, the reinforcement layer may be printed using a masking jig or a mold on the base layer (e.g., 430, 530, 630, 730, 830, 930; 7300 of FIGS. 9A to 9G) punched on a per-sheet basis. In the step S100 of applying the reinforcement layer, the reinforcement layer may be coated and cured at an end portion of the roll-type base layer (e.g., 430, 530, 630, 730, 830, 930; 7300 of FIGS. 9A to 9G) through a nozzle. In the step S100 of applying the reinforcement layer, the reinforcement layer may be formed by printing the base layer (e.g., 430, 530, 630, 730, 730, 830, 930; 7300 of FIGS. 9A to 9G) with UV or thermosetting ink having substantially the same rigidity as the base layer. In this case, the rigidity of the base layer (e.g., 430, 530, 630, 730, 830, 930; 7300 of FIGS. 9A to 9G) may be about 2000 MPa, and the rigidity of the UV molding used for applying the reinforcement layer may be about 1000 to 3000 MPa.

According to an embodiment, the manufacturing method S400 of the adhesive member may include a step S200 of applying the adhesive layer. In this case, the adhesive layer may be the adhesive layer 490 of FIG. 9A, the adhesive layer 590 of FIG. 9B, the adhesive layer 690 of FIG. 9C, the adhesive layer 790 of FIG. 9D, the adhesive layer 890 of FIG. 9E, or the adhesive layer 990 of FIG. 9F. In the step S200 of applying the adhesive layer, the adhesive layer may be applied to a surface of the base layer (e.g., 430, 530, 630, 730, 830, 930; 7300 of FIG. 9A to FIG. 9G) on which the reinforcement layer is printed. When applying the adhesive layer, a slot die coating method may be used. The adhesive layer may be applied to each of two opposite side surfaces of the base layer (e.g., 430, 530, 630, 730, 830, 930; 7300 of FIG. 9A to FIG. 9G) on which the reinforcement layer is printed. In this case, the first adhesive layer (e.g., 410, 510, 610, 710, 810, 910; 7100 of FIGS. 9A to 9G) may be applied to one side surface of the base layer (e.g., 430, 530, 630, 730, 830, 930; 7300 of FIGS. 9A to 9G) on which the reinforcement layer is printed, and the second adhesive layer (e.g., 420, 520, 620, 720, 820, 920; 7200 of FIGS. 9A to 9G) may be applied to the other side surface. Further, the buffer layer (e.g., 750, 850, 960, 970; 7500 of FIGS. 9D to 9G) may be applied between the base layer (e.g., 430, 530, 630, 730, 830, 930; 7300 of FIGS. 9A to 9G) on which the reinforcement layer is printed and the first adhesive layer (or the second adhesive layer).

According to an embodiment, the manufacturing method S400 of the adhesive member may include a processing and assembly step (S300). In the processing and assembly step S300 of the adhesive member, the adhesive member (e.g., 400, 500, 600, 700, 800, 900; 7000) that has undergone the above-described steps (e.g., S100 and S200) may be processed to fit the space between the supporting member (e.g., 311 of FIG. 5) and the cover (e.g., 380 of FIG. 5). Further, in the processing and assembly step S300 of the adhesive member, the processed adhesive member (e.g., 400, 500, 600, 700, 800, 900; 7000 of FIGS. 9A to 9G) may be attached to the cover (e.g., 380 of FIG. 5). Further, in the processing and assembly step S300 of the adhesive member, the processed adhesive member (e.g., 400, 500, 600, 700, 800, 900; 7000 of FIGS. 9A to 9G) may be attached to the supporting member (e.g., 311 of FIG. 5).

FIG. 11 is a partial cross-sectional view of an electronic device 101 taken along line C-C' of FIG. 3 according to an embodiment.

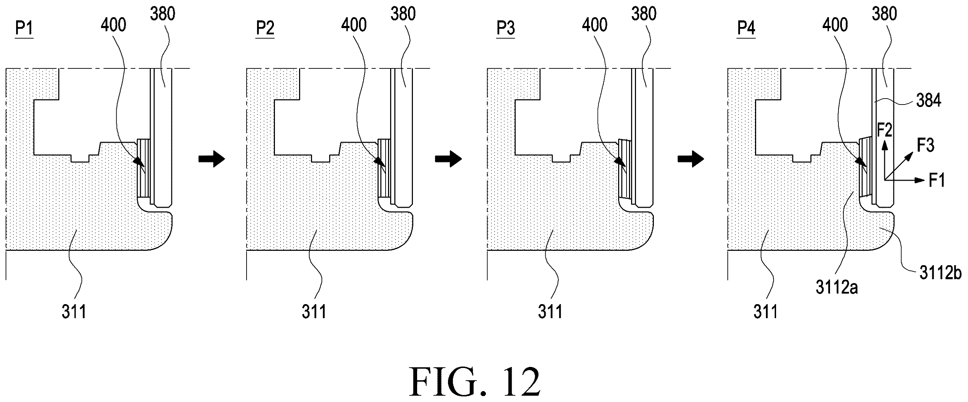

The embodiment of FIG. 11 may be combined with the embodiments of FIGS. 1 to 8 and 10. The embodiment of FIG. 11 may be combined with the embodiments of FIGS. 9A to 9G. The embodiment of FIG. 11 may be combined with the embodiments of FIGS. 12 to 15.

Referring to FIG. 11, an electronic device may include an adhesive member 400, 4000. The configuration of the adhesive member of FIG. 11 may be identical in whole or portion to the configuration of the adhesive members of FIGS. 2 to 8. The configuration of the adhesive member of FIG. 11 may be identical in whole or portion to the configuration of the adhesive members of FIGS. 9A to 9G.

Referring to FIG. 5, a housing (e.g., 301 of FIG. 5) may include a supporting member 311, a front plate 320, a display 330, and a cover 380. The description of the above-described components (e.g., 311, 320, 330, 380) may be the same as the description made with reference to FIG. 5.

According to an embodiment, the front plate 320 may be disposed in front of the supporting member 311 (e.g., in the +Z direction of FIG. 11).

According to an embodiment, the display 330 may be disposed between the supporting member 311 and the front plate 320.

According to an embodiment, the supporting member 311 may include a plurality of end portions (e.g., 3112 and 31113). The plurality of end portions (e.g., 3112 and 3113) may extend along the circumference of the supporting member 311. The plurality of end portions (e.g., 3112 and 3113) may include a first end portion 3112. The first end portion 3112 may be positioned on the rear side of the supporting member 311 (e.g., in the -Z direction of FIG. 11). The plurality of end portions (e.g., 3112 and 3113) may include a second end 3113. The second end portion 3113 may be positioned on the front side of the supporting member 311 (e.g., in the +Z direction of FIG. 11). The first end portion 3112 may be referred to as a "rear end portion," and the second end portion 3113 may be referred to as a "front end portion."

According to an embodiment, the first end portion 3112 may include a support plate 3112a and an edge 3112b. The description of the support plate 3112a and the edge 3112b may be the same as the description of the support plate and the edges made with reference to FIGS. 9A to 9G. The support plate 3112a of the first end portion 3112 may be referred to as a "first support plate." The edge 3112b of the first end portion 3112 may be referred to as a "first edge."

According to an embodiment, the second end portion 3113 may include a second support plate 3113a. The second support plate 3113a may face the display 330. The second support plate 3113a may be spaced apart from the display 330 to form a space therebetween.

According to an embodiment, the second end portion 3113 may include a second edge 3113b. The second edge 3113b may protrude in a direction crossing the extending direction of the second support plate 3113a. The second edge 3113b may extend along the circumference of the supporting member 311. The second edge 3113b may be disposed to surround the display 330. The second edge 3113b may be disposed to surround the front plate 320.

According to an embodiment, a plurality of adhesive members (e.g., 400 and 4000 of FIG. 11) may be disposed. The adhesive members (e.g., 400 and 4000 of FIG. 11) may include a first adhesive member 400. The first adhesive member 400 may be disposed between the first end portion 3112 and the cover 380, and may couple the supporting member 311 to the cover 380. The description of the first adhesive member 400 may be the same as the description of the adhesive member (e.g., 400, 500, 600, 700, 800, 900; 7000 of FIGS. 9A to 9G) made with reference to FIGS. 1 to 8 and 9A to 9G. The adhesive members (e.g., 400 and 4000 of FIG. 11) may include a second adhesive member 4000. The second adhesive member 4000 may be disposed between the second end portion 3113 and the display 330, and may couple the supporting member 311 to the display 330.

According to an embodiment, the first adhesive member 400 and the second adhesive member 4000 may have the same structure. For example, the adhesive layer of the first adhesive member 400 may increase in thickness toward the first edge 3112b, and the adhesive layer of the second adhesive member 4000 may increase in thickness toward the second edge 3113b.

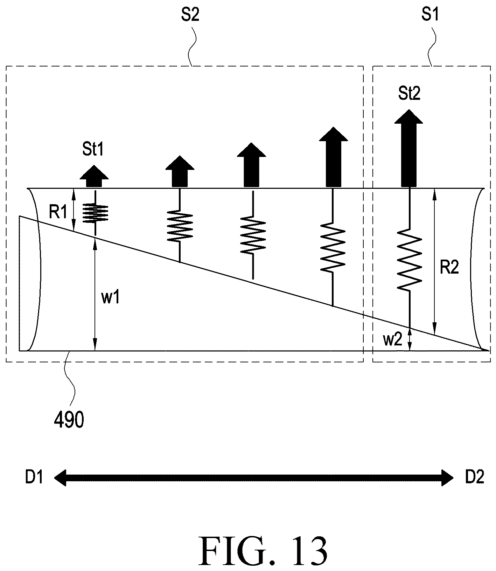

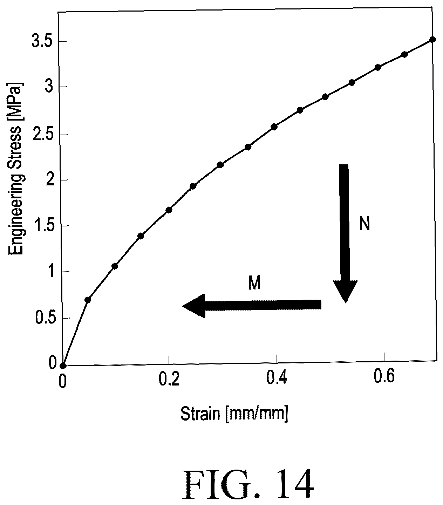

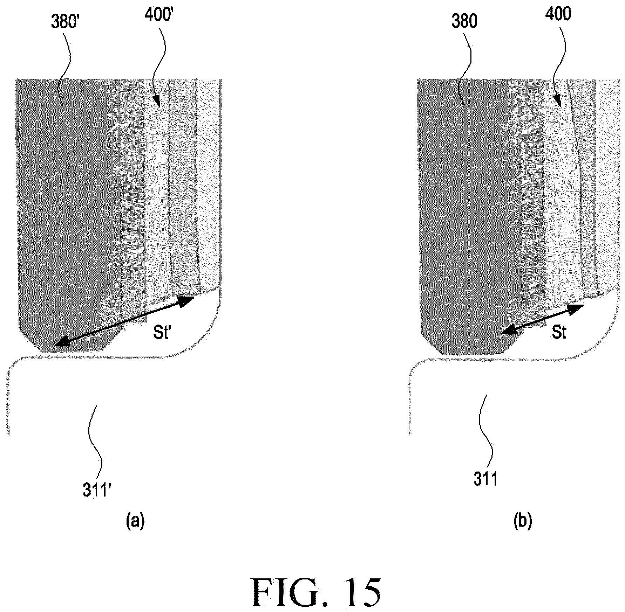

FIG. 12 is a cross-sectional view sequentially illustrating a movement of structures (e.g., 311, 380, 400) in a nearby area of the cover 380 when an electronic device (e.g., 101 of FIG. 1) falls to the ground according to an embodiment of the disclosure. FIG. 13 is a view conceptually describing strain acting on an adhesive layer (e.g., 490 of FIG. 9a) of an adhesive member (e.g., 400, 500, 600, 700, 800, 900; 7000 of FIGS. 9A to 9G), and FIG. 14 is a graph illustrating changes in stress according to the strain. FIG. 15 illustrates a contour comparing the stress St' acting on a structure (e.g., 311', 380', 400') according to a comparative example and the stress ST acting on a structure (e.g., 311, 380, 400) according to the embodiment of the disclosure.

Referring to FIGS. 12 to 15, an electronic device may include an adhesive member 400. The configuration of the adhesive members of FIGS. 12 to 15 may be identical in whole or portion to the configuration of the adhesive member of FIGS. 2 to 8. The configuration of the adhesive member of FIGS. 12 to 15 may be identical in whole or portion to the configuration of the adhesive member of FIGS. 9A to 9G. The configuration of the adhesive members of FIGS. 12 to 15 may be identical in whole or portion to the configuration of the adhesive member of FIGS. 10 to 11.

Referring to FIG. 12, the structures (e.g., 311, 380, 400) including the cover 380 may be sequentially moved in the states of P1, P2, P3, and P4 illustrated in FIG. 12 according to the drop of the electronic device (e.g., 101 of FIG. 1). When the electronic device (e.g., 101 of FIG. 1) falls, the cover 380 collides with the supporting member 311 and then moves away from the supporting member 311. In this case, delamination occurs between the cover 380 and the film 384 due to the sum F3 of the force F1 in the direction away from the support plate 3112a and the force F2 in the direction away from the edge 3112b. The force F3 may increase toward the end portion of the cover 380, resulting in the most severe delamination between the cover 380 and the film 384 at the end portion of the cover 380.

Referring to FIG. 13, in the adhesive member (e.g., 400, 500, 600, 700, 800, 900) of the disclosure, the thickness (e.g., w1, w2) of the adhesive layer (e.g., 490, 590, 690, 790, 890, 990 of FIGS. 9A to 9G) increases in the outer direction D1 of the housing (e.g., 301 of FIG. 5). In the second area S2, the thickness w1 of the adhesive layer (e.g., 490, 590, 690, 790, 890, 990 of FIGS. 9A to 9G) is larger than the thickness w2 of the adhesive layer (e.g., 490, 590, 690, 790, 890, 990 of FIGS. 9A to 9G) in the first area S1. Accordingly, the magnitude of the strain R1 acting on the adhesive layer (e.g., 490, 590, 690, 790, 890, 990; 7900 of FIGS. 9A to 9G) in the second area S2 becomes smaller than the strain R2 acting on the adhesive layer (e.g., 490, 590, 690, 790, 890, 990; 7900 of FIGS. 9A to 9G) in the first area S1. Therefore, when referring to FIG. 14, due to the relationship where the magnitude of stress decreases (N) as the magnitude of strain decreases (M), the magnitude of the stress St1 in the second area S2 becomes smaller than the magnitude of the stress St2 in the first area S1. As a result, the electronic device (e.g., 101 of FIG. 1) according to the embodiment of the disclosure has the advantage of reducing the delamination between the cover 380 and the film 384 by mitigating the stress St1 in the second area S2 where the delamination between the cover 380 and the film 384 occurs most severely, as illustrated in FIG. 12.

Referring to FIG. 15, it is possible to compare an electronic device (a) according to a comparative embodiment in which the thickness of the adhesive layer is constant in the length direction of the adhesive member 400, and an electronic device (b) according to an embodiment of the disclosure in which the thickness of the adhesive layer varies in the length direction of the adhesive member 400. Referring to FIG. 15, it may be identified that the stress St generated at the end portion of the cover 380 of the electronic device b according to an embodiment of the disclosure is smaller than the stress St' generated at the end portion of the cover 380' of the electronic device a according to the comparative example.

The electronic device may include a supporting member providing a space in which the electrical components are disposed. A member (e.g., a cover) for covering the electrical components is disposed on one side of the supporting member, and the cover is fixed to the supporting member through an adhesive member. The cover may be composed of a plate formed of a plastic material and a film attached to the plate to form the outer appearance of the electronic device.

In the electronic device of the comparative example, delamination may occur between the film and the plate as a result of the device being dropped, leading to diminished aesthetics and reduced waterproof effectiveness.

According to various embodiments of the disclosure, it is possible to prevent or reduce delamination of the film constituting the cover.

According to various embodiments of the disclosure, the binding force between the cover and the adhesive member may be strengthened.

The disclosure is not limited to the foregoing embodiments but various modifications or changes may rather be made thereto without departing from the spirit and scope of the disclosure.

The electronic device according to various embodiments of the disclosure may prevent or reduce delamination of a film by varying the thickness of an adhesive layer in the adhesive member differently depending on the position of the adhesive member.

Effects obtainable from the disclosure are not limited to the above-mentioned effects, and other effects not mentioned may be apparent to one of ordinary skill in the art from the following description.

A electronic device (e.g., 101 of FIG. 1) according to an embodiment may comprise: a housing (e.g., 301 of FIG. 5) including a supporting member (e.g., 311 of FIG. 5).

The electronic device (e.g., 101 of FIG. 1) according to an embodiment may comprise a cover (e.g., 380 of FIGS. 9A to 9G), at least a portion of which is disposed to face the supporting member (e.g., 311 of FIG. 5) and extending toward an edge (e.g., 3112b of FIGS. 9A to 9G) of the supporting member (e.g., 311 of FIG. 5).

The electronic device (e.g., 101 of FIG. 1) according to an embodiment may comprise an adhesive member (e.g., 400; 500; 600; 700; 800; 900; 7000 of FIGS. 9A to 9G) disposed between the supporting member (e.g., 311 of FIG. 5) and the cover (e.g., 380 of FIGS. 9A to 9G), and including a first area (e.g., S1 of FIGS. 9A to 9G) and a second area (e.g., S2 of FIGS. 9A to 9G) extending from the first area (e.g., S1 of FIGS. 9A to 9G) toward the edge (e.g., 3112b of FIGS. 9A to 9G) of the supporting member (e.g., 311 of FIG. 5).

The adhesive member (e.g., 400; 500; 600; 700; 800; 900; 7000 of FIGS. 9A to 9G) according to an embodiment may include an adhesive layer (e.g., 490; 590; 690; 790; 890; 990; 7900 of FIGS. 9A to 9G) including a first adhesive layer (e.g., 410; 510; 610; 710; 810; 910; 7100 of FIGS. 9A to 9G) coupled to the supporting member (e.g., 311 of FIG. 5) and a second adhesive layer (e.g., 420; 520; 620; 720; 820; 920; 7200 of FIGS. 9A to 9G) spaced apart from the first adhesive layer and coupled to the cover (e.g., 380 of FIGS. 9A to 9G).

The adhesive member (e.g., 400; 500; 600; 700; 800; 900; 7000 of FIGS. 9A to 9G) according to an embodiment may include a base layer (e.g., 430; 530; 630; 730; 830; 930; 7300 of FIGS. 9A to 9G) disposed between the first adhesive layer and the second adhesive layer.

According to an embodiment, at least one of the first adhesive layer and the second adhesive layer may have a larger thickness in the second area (e.g., S2 of FIGS. 9A to 9G) than in the first area (e.g., S1 of FIGS. 9A to 9G).

According to an embodiment, the supporting member (e.g., 311 of FIG. 5) may include a support plate (e.g., 3112a of FIGS. 9A to 9G) disposed to face the cover (e.g., 380 of FIGS. 9A to 9G).

According to an embodiment, the supporting member (e.g., 311 of FIG. 5) may include the edge (e.g., 3112b of FIGS. 9A to 9G) protruding from the support plate (e.g., 3112a of FIGS. 9A to 9G) in a direction crossing a extending direction of the support plate (e.g., 3112a of FIGS. 9A to 9G).

According to an embodiment, the adhesive member (e.g., 400; 500; 600; 700; 800; 900; 7000 of FIGS. 9A to 9G) may be disposed between the cover (e.g., 380 of FIGS. 9A to 9G) and the support plate (e.g., 3112a of FIGS. 9A to 9G). A thickness of the adhesive layer (e.g., 490; 590; 690; 790; 890; 990; 7900 of FIGS. 9A to 9G) may increase toward the edge (e.g., 3112b of FIGS. 9A to 9G).

According to an embodiment, the edge (e.g., 3112b of FIGS. 9A to 9G) of the supporting member (e.g., 311 of FIG. 5) may be positioned in a direction (e.g., D1) toward an outer side of the housing (e.g., 301 of FIG. 5) relative to the first area (e.g., S1 of FIGS. 9A to 9G).

According to an embodiment, the second area (e.g., S2 of FIGS. 9A to 9G) may be positioned between the edge (e.g., 3112b of FIGS. 9A to 9G) of the supporting member (e.g., 311 of FIG. 5) and the first area (e.g., S1 of FIGS. 9A to 9G).

According to an embodiment, a thickness of the adhesive layer (e.g., 490; 590; 690; 790; 890; 990; 7900 of FIGS. 9A to 9G) may increase along the direction (e.g., D1 of FIGS. 9A to 9G) toward the outer side of the housing (e.g., 301 of FIG. 5).

According to an embodiment, the adhesive layer (e.g., 490; 590; 690; 790; 890; 990; 7900 of FIGS. 9A to 9G) may extend toward the edge (e.g., 3112b of FIGS. 9A to 9G) of the supporting member (e.g., 311 of FIG. 5), and gradually increase in thickness toward the edge (e.g., 3112b of FIGS. 9A to 9G) of the supporting member (e.g., 311 of FIG. 5).

According to an embodiment, the adhesive member (e.g., 400; 500; 600; 700; 800; 900; 7000 of FIGS. 9A to 9G) may further include a reinforcement layer (e.g., 440; 540; 640, 650; 740; 840; 940, 950; 7400 of FIGS. 9A to 9G) disposed between the adhesive layer (e.g., 490; 590; 690; 790; 890; 990; 7900 of FIGS. 9A to 9G) and the base layer (e.g., 430; 530; 630; 730; 830; 930; 7300 of FIGS. 9A to 9G).

According to an embodiment, a thickness of the reinforcement layer (e.g., 440; 540; 640, 650; 740; 840; 940, 950; 7400 of FIGS. 9A to 9G) may decrease along the direction (e.g., D1 of FIGS. 9A to 9G) toward the edge (e.g., 3112b of FIGS. 9A to 9G) of the supporting member (e.g., 311 of FIG. 5).

According to an embodiment, the reinforcement layer (e.g., 640, 650; 940, 950 of FIGS. 9A to 9F) may include a first reinforcement layer (e.g., 640; 940 of FIGS. 9C and 9F) disposed between the first adhesive layer (e.g., 610; 910 of FIGS. 9C and 9F) and the base layer (e.g., 630; 930 of FIGS. 9C and 9F).

According to an embodiment, the reinforcement layer (e.g., 640, 650; 940, 950 of FIGS. 9A to 9F) may include a second reinforcement layer (e.g., 650; 950 of FIGS. 9C and 9F) disposed between the second adhesive layer (e.g., 620; 920 of FIGS. 9C to 9F) and the base layer (e.g., 630; 930 of FIGS. 9C and 9F).

According to an embodiment, the reinforcement layer (e.g., 440; 540; 640; 650; 740; 840; 940; 950 of FIGS. 9A to 9F) may be formed by being printed on one surface of the base layer (e.g., 430; 530; 630; 730; 830; 930 of FIGS. 9A to 9F).

According to an embodiment, the adhesive layer (e.g., 790; 890; 990; 7900 of FIGS. 9A to 9G) may include a buffer layer (e.g., 750; 850; 960; 970; 7500 of FIGS. 9A to 9G) disposed between the first adhesive layer (e.g., 710; 810; 910; 7100 of FIGS. 9A to 9G) and the base layer (e.g., 730; 830; 930; 7300 of FIGS. 9A to 9G) or between the second adhesive layer (e.g., 720; 820; 920; 7200 of FIGS. 9A to 9G) and the base layer (e.g., 730; 830; 930; 7300 of FIGS. 9A to 9G).

According to an embodiment, the adhesive member (e.g., 700; 800; 900; 7000 of FIGS. 9A to 9G) may further include a reinforcement layer (e.g., 740; 840; 940, 950; 7400 of FIGS. 9A to 9G) disposed between the adhesive layer (e.g., 790; 890; 990; 7900 of FIGS. 9A to 9G) and the base layer (e.g., 730; 830; 930; 7300 of FIGS. 9A to 9G) and contacting the buffer layer (e.g., 750; 850; 960, 970; 7500 of FIGS. 9A to 9G).

According to an embodiment, the adhesive member (e.g., 900 of FIG. 9F) may include a first reinforcement layer (e.g., 940 of FIG. 9F) disposed between the first adhesive layer (e.g., 910 of FIG. 9F) and the base layer (e.g., 930 of FIG. 9F).

According to an embodiment, the adhesive member (e.g., 900 of FIG. 9F) may further include a second reinforcement layer (e.g., 950 of FIG. 9F) disposed between the second adhesive layer (e.g., 920 of FIGS. 9F) and the base layer (e.g., 930 of FIGS. 9F).

According to an embodiment, the buffer layer (e.g., 960; 970 of FIG. 9F) may include a first buffer layer (e.g., 960 of FIG. 9F) disposed between the first adhesive layer (e.g., 910 of FIG. 9F) and the base layer (e.g., 930 of FIG. 9F) and contacting the first reinforcement layer (e.g., 940 of FIG. 9F).

According to an embodiment, the buffer layer (e.g., 960; 970 of FIG. 9F) may include a second buffer layer (e.g., 970 of FIG. 9F) disposed between the second adhesive layer (e.g., 920 of FIG. 9F) and the base layer (e.g., 930 of FIG. 9F) and contacting the second reinforcement layer (e.g., 950 of FIG. 9F).

According to an embodiment, the adhesive member (e.g., 400; 500; 600; 700; 800; 900; 7000 of FIGS. 9A to 9G) may extend from the first area (e.g., S1 of FIGS. 9A to 9G) toward the edge (e.g., 3112b of FIGS. 9A to 9G) of the supporting member (e.g., 311 of FIG. 5) with a constant thickness.

According to an embodiment, the cover (e.g., 380 of FIGS. 9A to 9G) may include a film (e.g., 384) spaced apart from the supporting member (e.g., 311 of FIG. 5) and coupled to the second adhesive layer (e.g., 420; 520; 620; 720; 820; 920; 7200 of FIGS. 9A to 9G).

The electronic device (e.g., 101 of FIG. 1) according to an embodiment may comprise a front plate (e.g., 320 of FIG. 5) spaced apart from one side of the supporting member (e.g., 311 of FIG. 5).

The electronic device (e.g., 101 of FIG. 1) according to an embodiment may further comprise a display (e.g., 330 of FIG. 5) disposed between the front plate (e.g., 320 of FIG. 5) and the supporting member (e.g., 311 of FIG. 5).

According to an embodiment, the adhesive member (e.g., 400; 4000 of FIG. 11) may include a first adhesive member (e.g., 400 of FIG. 11) disposed between the supporting member (e.g., 311 of FIG. 11) and the cover (e.g., 380 of FIG. 11).

According to an embodiment, the adhesive member (e.g., 400; 4000 of FIG. 11) may include a second adhesive member (e.g., 4000 of FIG. 11) disposed between the supporting member (e.g., 311 of FIG. 11) and the display (e.g., 330 of FIG. 11).

An electronic device (e.g., 101 of FIG. 1) according to an embodiment may comprise a supporting member (e.g., 311 of FIG. 5) having an edge (e.g., 3112b of FIG. 9A to FIG. 9G).

The electronic device (e.g., 101 of FIG. 1) according to an embodiment may comprise a cover (e.g., 380 of FIG. 9A to FIG. 9G) disposed to at least partially face the supporting member (e.g., 311 of FIG. 5) and extending toward the edge (e.g., 3112b of FIG. 9A to FIG. 9G) of the supporting member (e.g., 311 of FIG. 5).

The electronic device (e.g., 101 of FIG. 1) according to an embodiment may comprise an adhesive member (e.g., 400; 500; 600; 700; 800; 900; 7000 of FIGS. 9A to 9G) disposed between the supporting member (e.g., 311 of FIG. 5) and the cover (e.g., 380 of FIG. 9A to FIG. 9G) and extending toward the edge (e.g., 3112b of FIGS. 9A to 9G) of the supporting member (e.g., 311 of FIG. 5).

The adhesive member (e.g., 400; 500; 600; 700; 800; 900; 7000 of FIGS. 9A to 9G) according to an embodiment may include a base layer (e.g., 430; 530; 630; 730; 830; 930; 7300 of FIGS. 9A to 9G) disposed between the supporting member (e.g., 311 of FIG. 5) and the cover (e.g., 380 of FIGS. 9A to 9G) and spaced apart from each of the supporting member (e.g., 311 of FIG. 5) and the cover (e.g., 380 of FIGS. 9A to 9G).

In an embodiment, the adhesive member (e.g., 400; 500; 600; 700; 800; 900; 7000 of FIGS. 9A to 9G) may have one surface coupled to the supporting member (e.g., 311 of FIG. 5) and another surface coupled to the cover (e.g., 380 of FIGS. 9A to 9G), providing a space where the base layer (e.g., 430; 530; 630; 730; 830; 930; 7300 of FIGS. 9A to 9G) is disposed between the one surface and the other surface, and may include an adhesive layer (e.g., 490; 590; 690; 790; 890; 990; 7900 of FIGS. 9A to 9G) that increases in thickness in a direction (e.g., D1 of FIGS. 9A to 9G) toward the edge (e.g., 3112b of FIGS. 9A to 9G) of the supporting member (e.g., 311 of FIG. 5).

The adhesive layer (e.g., 490; 590; 690; 790; 890; 990; 7900 of FIGS. 9A to 9G) according to an embodiment may include a first adhesive layer (e.g., 410; 510; 610; 710; 810; 910; 7100 of FIGS. 9A to 9G) disposed between the base layer (e.g., 430; 530; 630; 730; 830; 930; 7300 of FIGS. 9A to 9G) and the supporting member (e.g., 311 of FIG. 5).

The adhesive layer (e.g., 490; 590; 690; 790; 890; 990; 7900;) according to an embodiment may include a second adhesive layer (e.g., 420; 520; 620; 720; 820; 920; 7200 of FIGS. 9A to 9G) disposed between the base layer (e.g., 430; 530; 630; 730; 830; 930; 7300 of FIGS. 9A to 9G) and the cover (e.g., 380 of FIGS. 9A to 9G).

The adhesive layer (e.g., 790; 890; 990; 7900 of FIGS. 9D to 9G) may further include a buffer layer (e.g., 750; 850; 960, 970; 7500 of FIGS. 9D to 9G) disposed between the first adhesive layer (e.g., 710; 810; 910; 7100 of FIGS. 9D to 9G) and the base layer (e.g., 730; 830; 930; 7300 of FIGS. 9D to 9G) or between the second adhesive layer (e.g., 720; 820; 920; 7200 of FIGS. 9D to 9G) and the base layer (e.g., 730; 830; 930; 7300 of FIGS. 9D to 9G).

The adhesive member (e.g., 400; 500; 600; 700; 800; 900; 7000 of FIGS. 9A to 9G) according to an embodiment may further include a reinforcing layer (e.g., 440; 540; 640, 650; 740; 840; 940, 950; 7400 of FIGS. 9A to 9G) disposed between the base layer (e.g., 430; 530; 630; 730; 830; 930; 7300 of FIGS. 9A to 9G) and the first adhesive layer (e.g., 410; 510; 610; 710; 810; 910; 7100 of FIGS. 9A to 9G) or between the base layer (e.g., 430; 530; 630; 730; 830; 930; 7300 of FIGS. 9A to 9G) and the second adhesive layer (e.g., 420; 520; 620; 720; 820; 920; 7200 of FIGS. 9A to 9G).

The cover (e.g., 380 of FIGS. 9A to 9G) according to an embodiment may include a film (384 of FIGS. 9A to 9G) coupled to the second adhesive layer (e.g., 420; 520; 620; 720; 820; 920; 7200 of FIGS. 9A to 9G).

While the disclosure has been shown and described with reference to exemplary embodiments thereof, it will be apparent to those of ordinary skill in the art that various changes in form and detail may be made thereto without departing from the spirit and scope of the present invention as defined by the following claims.

## Claims

1. An electronic device (101) comprising:
a housing (301) including a supporting member (311);
a cover (380), at least a portion of which is disposed to face the supporting member (311) and extending toward an edge (3112b) of the supporting member (311); and
an adhesive member (400; 500; 600; 700; 800; 900; 7000) disposed between the supporting member (311) and the cover (380), and including a first area (S1) and a second area (S2) extending from the first area (S1) toward the edge (3112b) of the supporting member (311), wherein the adhesive member (400; 500; 600; 700; 800; 900; 7000) includes:
an adhesive layer (490; 590; 690; 790; 890; 990; 7900) including a first adhesive layer (410; 510; 610; 710; 810; 910; 7100) coupled to the supporting member (311) and a second adhesive layer (420; 520; 620; 720; 820; 920; 7200) spaced apart from the first adhesive layer (410; 510; 610; 710; 810; 910; 7100) and coupled to the cover (380); and
a base layer (430; 530; 630; 730; 830; 930; 7300) disposed between the first adhesive layer (410; 510; 610; 710; 810; 910; 7100) and the second adhesive layer, and
wherein at least one of the first adhesive layer (410; 510; 610; 710; 810; 910; 7100) and the second adhesive layer (420; 520; 620; 720; 820; 920; 7200) has a larger thickness in the second area (S2) than in the first area (S1).

2. The electronic device (101) of claim 1, wherein the supporting member (311) includes:
a support plate (3112a) disposed to face the cover (380); and
the edge (3112b) protruding from the support plate (3112a) in a direction crossing an extending direction of the support plate (3112a),
wherein the adhesive member (400; 500; 600; 700; 800; 900; 7000) is disposed between the cover (380) and the support plate (3112a), and wherein a thickness of the adhesive layer (490; 590; 690; 790; 890; 990; 7900) increases toward the edge (3112b).

3. The electronic device (101) of claim 1 or 2, wherein the edge (3112b) of the supporting member (311) is positioned in a direction (D1) toward an outer side of the housing (301) relative to the first area (S1), and
wherein the second area (S2) is positioned between the edge (3112b) of the supporting member (311) and the first area (S1).

4. The electronic device (101) of any one of claims 1 to 3, wherein a thickness of the adhesive layer (490; 590; 690; 790; 890; 990; 7900) increases along the direction (D1) toward the outer side of the housing (301).

5. The electronic device (101) of any one of claims 1 to 4, wherein the adhesive layer (490; 590; 690; 790; 890; 990; 7900) extends toward the edge (3112b) of the supporting member (311), and gradually increases in thickness toward the edge (3112b) of the supporting member (311).

6. The electronic device (101) of any one of claims 1 to 5, wherein the adhesive member (400; 500; 600; 700; 800; 900; 7000) further includes a reinforcement layer (440; 540; 640, 650; 740; 840; 940, 950; 7400) disposed between the adhesive layer (490; 590; 690; 790; 890; 990; 7900) and the base layer (430; 530; 630; 730; 830; 930; 7300).

7. The electronic device (101) of claim 6, wherein a thickness of the reinforcement layer (440; 540; 640, 650; 740; 840; 940, 950; 7400) decreases along the direction (D1) toward the edge (3112b) of the supporting member (311).

8. The electronic device (101) of claim 6 or 7, wherein the reinforcement layer (640, 650; 940, 950) includes:
a first reinforcement layer (640; 940) disposed between the first adhesive layer (610; 910) and the base layer (630; 930); and
a second reinforcement layer (650; 950) disposed between the second adhesive layer (620; 920) and the base layer (630; 930).

9. The electronic device (101) of any one of claims 6 to 8, wherein the reinforcement layer (440; 540; 640, 650; 740; 840; 940, 950) is formed by being printed on one surface of the base layer (430; 530; 630; 730; 830; 930).

10. The electronic device (101) of any one of claims 1 to 9, wherein the adhesive layer (790; 890; 990; 7900) includes a buffer layer (750; 850; 960, 970; 7500) disposed between the first adhesive layer (710; 810; 910; 7100) and the base layer (730; 830; 930; 7300) or between the second adhesive layer (720; 820; 920; 7200) and the base layer (730; 830; 930; 7300).

11. The electronic device (101) of claim 10, wherein the adhesive member (700; 800; 900; 7000) further includes a reinforcement layer (740; 840; 940, 950; 7400) disposed between the adhesive layer (790; 890; 990; 7900) and the base layer (730; 830; 930; 7300) and contacting the buffer layer (750; 850; 960, 970; 7500).

12. The electronic device (101) of claim 10 or 11, wherein the adhesive member (900) includes:
a first reinforcement layer (940) disposed between the first adhesive layer (910) and the base layer (930); and
a second reinforcement layer (950) disposed between the second adhesive layer (920) and the base layer (930), and wherein the buffer layer (960, 970) includes:
a first buffer layer (960) disposed between the first adhesive layer (910) and the base layer (930) and contacting the first reinforcement layer (940); and
a second buffer layer (970) disposed between the second adhesive layer (920) and the base layer (930) and contacting the second reinforcement layer (950).

13. The electronic device (101) of any one of claims 1 to 12, wherein the adhesive member (400; 500; 600; 700; 800; 900; 7000) extends from the first area (S1) toward the edge (3112b) of the supporting member (311) with a constant thickness.

14. The electronic device (101) of any one of claims 1 to 13, wherein the cover (380) includes a film (384) spaced apart from the supporting member (311) and coupled to the second adhesive layer (420; 520; 620; 720; 820; 920; 7200).

15. The electronic device (101) of any one of claims 1 to 14, further comprising:
a front plate (320) spaced apart from one side of the supporting member (311); and
a display (330) disposed between the front plate (320) and the supporting member (311), wherein the adhesive member (400, 4000) includes:
a first adhesive member (400) disposed between the supporting member (311) and the cover (380); and
a second adhesive member (4000) disposed between the supporting member (311) and the display (330).
